(19) Europäisches Patentamt / European Patent Office / Office européen des brevets

(11) **EP 3 995 691 B1**

(12) **EUROPÄISCHE PATENTSCHRIFT**

(45) Veröffentlichungstag und Bekanntmachung des Hinweises auf die Patenterteilung:
**29.04.2026  Patentblatt 2026/18**

(21) Anmeldenummer: **20205607.3**

(22) Anmeldetag: **04.11.2020**

(51) Internationale Patentklassifikation (IPC):
*F03D 7/04* *(2006.01)*

(52) Gemeinsame Patentklassifikation (CPC):
**F03D 7/028; F03D 7/0224;** F05B 2270/20;
F05B 2270/323; F05B 2270/325; F05B 2270/331;
F05B 2270/333; Y02E 10/72

(54) **VERFAHREN ZUM BETREIBEN EINER WINDENERGIEANLAGE**

METHODS FOR OPERATING A WIND TURBINE

PROCÉDÉS DE FONCTIONNEMENT D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.05.2022  Patentblatt 2022/19**

(73) Patentinhaber: **Wobben Properties GmbH**
**26607 Aurich (DE)**

(72) Erfinder:
• **Länger-Möller, Annika**
**26603 Aurich (DE)**
• **von Albedyll , Andreas**
**28209 Bremen (DE)**
• **Scheit, Christoph**
**26607 Aurich (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
EP-A1- 3 317 519          EP-A2- 1 918 581
EP-B1- 3 317 519          US-A1- 2013 280 066
US-A1- 2018 171 978          US-A1- 2020 102 934

## Beschreibung

Die vorliegende Offenbarung betrifft ein Verfahren zum Betreiben einer Windenergieanlage, eine zugehörige Windenergieanlage und einen Windpark.

Es ist bekannt, Ertragsrechnungen bei Windenergieanlagen mit standortspezifischen Parametern durchzuführen. Hierbei hat sich allerdings herausgestellt, dass die nachgelagert festgestellten Erträge aufgrund der tatsächlichen Standortbedingungen abweichen.

Das Dokument US 2020/102934 A1 betrifft ein Verfahren zum Betrieb einer Windenergieanlage mit einem Rotor und einem über den Rotor angetriebenen Generator zur Erzeugung einer elektrischen Leistung bei der vorgesehen ist, dass eine angepasste Drehzahl des Rotors der Windenergieanlage zum Erzeugen einer abzugebenden elektrischen Leistung unter Verwendung der angepassten Betriebsführung und damit unter Verwendung der für die Windenergieanlage relevanten Luftdichte vorgegeben wird, wobei zum Erzeugen einer optimierten abzugebenden elektrischen Leistung die angepasste Drehzahl eine erhöhte Drehzahl bei erniedrigter Luftdichte bzw. eine erniedrigte Drehzahl bei erhöhter Luftdichte ist, wobei zusätzlich oder alternativ- eine Schallemission der Windenergieanlage für die vorgegebene angepasste Drehzahl des Rotors unter Verwendung der für die Windenergieanlage relevanten Luftdichte ermittelt wird, und die angepasste Drehzahl korrigiert wird, insbesondere auf Basis der ermittelten Schallemission unter Verwendung der für die Windenergieanlage relevanten Luftdichte.

EP 3 317 519 A1 beschreibt ein Verfahren umfassend das Bestimmen eines Ermüdungslebensdauerverbrauchs für jede von einer oder mehreren Komponenten einer Windturbine; das Vergleichen des angestrebten Ermüdungslebensdauerverbrauchs mit einem Maß des Ermüdungslebensdauerverbrauchs für jede von der einen oder den mehreren Turbinenkomponenten; und das Steuern der Turbinenleistungsabgabe auf der Grundlage des Vergleichs. Der angestrebte Ermüdungslebensdauerverbrauch wird bestimmt, indem Daten, die eine angestrebte Rate der Akkumulation von Ermüdungsschäden über mindestens einen Teil der Betriebslebensdauer der Windturbine angeben, und Daten, die eine erwartete Rate der Akkumulation von Ermüdungsschäden angeben, die durch saisonale Schwankungen der Turbinenbetriebsbedingungen verursacht werden, kombiniert werden. Eine entsprechende Steuerung für Windturbinen und Windkraftanlagen ist ebenfalls beschrieben.

US 2018/171978 A1 beschreibt ein Verfahren zur Berechnung eines maximalen sicheren überbewerteten Leistungsbedarfs für eine Windturbine, die unter Nicht-Standard-Bedingungen betrieben wird, umfassend die Schritte der Bestimmung eines Wertes, der ein Risiko der Überschreitung einer ultimativen Auslegungslast während des Betriebs in einem Standard-Betriebszustand anzeigt, und der Festlegung eines maximalen überbewerteten Leistungsbedarfs, der einer maximalen Leistung entspricht, die die Turbine unter den Nicht-Standard-Betriebsbedingungen erzeugen kann, ohne ein erhöhtes Risiko der Überschreitung der ultimativen Auslegungslast in Bezug auf den Betrieb im Standardzustand einzugehen.

EP 1 918 581 A2 beschreibt eine Windturbine mit einem Rotor, der eine Nabe und mindestens ein mit der Nabe gekoppeltes Rotorblatt, einem ersten Sensor, der so konfiguriert ist, dass er die Umgebungslufttemperatur misst und ein Umgebungslufttemperatursignal erzeugt und überträgt, und mindestens einem Prozessor, der in elektronischer Datenkommunikation mit dem ersten Sensor gekoppelt ist, wobei der mindestens eine Prozessor so konfiguriert ist, dass er die Verringerung der auf die Komponenten der Windturbine wirkenden Lasten durch mindestens einen der folgenden Punkte erleichtert: Empfangen eines gemessenen Umgebungslufttemperatursignals von dem ersten Sensor, Verringern einer Leistungsabgabe der Windturbine, wenn das empfangene Umgebungslufttemperatursignal unter einem vorbestimmten Grenzwert liegt.

US 2013/280066 A1 beschreibt ein Verfahren zum Betrieb einer Windturbine, bei dem die Windturbine in einem Geräuschreduzierungsmodus betrieben wird, der auf mindestens einem einstellpunkt eines Windturbinenparameters basiert, so dass das von der Windturbine erzeugte Geräusch unterhalb eines vordefinierten Geräuschemissionspegels bleibt, ein auf die tatsächliche Luftdichte bezogener Wert erhalten wird und ein Korrekturfaktor auf den mindestens einen Einstellpunkt eines Windturbinenparameters angewendet wird. Der Korrekturfaktor wird in Abhängigkeit von dem auf die tatsächliche Luftdichte bezogenen Wert bestimmt.

Vor diesem Hintergrund war es eine Aufgabe der vorliegenden Offenbarung, eventuelle Leistungseinbußen aufgrund der Standortbedingungen durch die Betriebsführung aufzufangen und die individuelle Betriebsführung der Windenergieanlage in Abhängigkeit des Standorts zu verbessern. Eine Anpassung der Betriebsführung an Standorte mit extremen Umgebungs- oder Windbedingungen muss gleichzeitig die Einhaltung der Lasten und Schallleistungspegel gewährleisten, um eine optimalen Einstellung auch für komplexere Standorte zu ermöglichen.

Die folgenden Begriffe und geläufigen Abkürzungen werden für die nachfolgende Beschreibung vorausgesetzt.

**AEP:** Annual Energy Production; Jährlicher Energieertrag

$\alpha_{min}$/**Mindestblattwinkel:** Entspricht dem Blattwinkel, also dem Einstellwinkel eines Rotorblattes, mit dem die Windenergieanlage in einem Teillastbereich mindestens betrieben wird. Erhöhungen des Blattwinkels sind beispielsweise aufgrund von Lasten, Leistungs- und/oder Schallanforderungen möglich.

**Betriebskennlinie:** Zusammenhang von Drehzahl n des Rotors und erzeugter elektrischer Leistung $P_{el}$, auf welchen die Windenergieanlage im Betrieb regelt.

**Betriebspunkt:** Diskreter Punkt der Betriebskennlinie und einem definierten Pitchwinkel der Rotorblätter, der bei einer Windgeschwindigkeit erreicht wird.

**$C_p$:** Leistungsbeiwert der Windenergieanlage, der angibt, wieviel Leistung die Windenergieanlage im Verhältnis zur vorhandenen Windleistung ernten kann.

**$C_t$:** Schubbeiwert der Windenergieanlage, der angibt, wieviel Schub (Kraft senkrecht aus der Rotorebene hinaus) die Windenergieanlage im Verhältnis zu einer geschlossenen Kreisfläche erzeugt.

**$\lambda$ / TSR:** Schnelllaufzahl/Tip-speed-ratio. Hierbei handelt es sich um ein Verhältnis aus der Geschwindigkeit des Rotorblattes an der Rotorblattspitze zu der Windgeschwindigkeit.

**Lastreserve:** Unterschied der Momentanlast bzw. der Stanortlastbedingungen zu dem Auslegungslastfall.

**Leistungsreserve:** Unterschied der elektrischen Leistung zu möglicher elektrischer Leistung.

**Schallpegelreserve:** Unterschied des erzeugten Schallpegels zum zulässigen Schallpegel.

**$M_x$:** Blattmoment in Schwenkrichtung

**$M_y$:** Blattmoment in Schlagrichtung

**IPC:** Individual Pitch Control, individuelle Blattwinkelsteuerung, die Einstellwinkel der einzelnen Rotorblätter können unabhängig voneinander - ergänzend zu einer kollektiven Steuerung - gesteuert werden.

In einem Aspekt der vorliegenden Offenbarung wird ein Verfahren zum Betreiben einer Windenergieanlage gemäß Anspruch 1 vorgeschlagen, wobei das Verfahren die folgenden sowie weitere Schritte umfasst:

- Bestimmen wenigstens zweier, vorzugsweise wenigstens dreier und besonders bevorzugt sämtlicher, der Umgebungsparameter der Umgebung der Windenergieanlage ausgewählt aus der Liste bestehend aus: Turbulenzintensität, Luftdichte, Lufttemperatur, Scherung und Niederschlag,

- Bereitstellen von Randbedingungen zum Betreiben der Windenergieanlage, die Randbedingungen enthalten wenigstens eine aus einer Lastrandbedingung, einer Schallpegelrandbedingung und einer Leistungsrandbedingung,

- Anpassen einer Betriebsführung, insbesondere eines Betriebspunktes und/oder einer Betriebskennlinie, der Windenergieanlage ausgehend von einer Kombination der Änderungen der bestimmten Umgebungsparameter unter Berücksichtigung der Randbedingungen.

Die Umgebungsparameter können vorab, also vor Inbetriebnahme oder sogar vor Errichtung der Windenergieanlage, bestimmt werden. Vorzugsweise werden die Umgebungsparameter alternativ oder zusätzlich während des Betriebes der Windenergieanlage bestimmt. Zur Bestimmung der Umgebungsparameter sind vorzugsweise geeignete Sensoren an der Windenergieanlage oder in Umgebung der Windenergieanlage bereitgestellt. Die Art und Ausgestaltung der Sensoren zur Bestimmung der Umgebungsparameter ist nicht eingeschränkt, so lange sie zur Bestimmung eines oder mehrerer der Umgebungsparameter Turbulenzintensität, Luftdichte, Lufttemperatur, Scherung und Niederschlag geeignet sind.

Die Lastrandbedingung kann beispielsweise eine nach dem Auslegungsfall zulässige Last sein. Die Schallpegelrandbedingung kann beispielsweise einen zulässigen Schallpegel umfassen. Die Leistungsrandbedingung kann beispielsweise eine mögliche elektrische Leistung und/oder eine maximale netzseitige Leistung umfassen, wobei auch andere für die Leistung indikative Randbedingungen wie Drehmomentgrenzen etc. vorstellbar sind.

Besonders bevorzugt wird zusätzlich ein auf der Windgeschwindigkeit basierender Umgebungsparameter bereitgestellt. Dieser kann beispielsweise direkt die Windgeschwindigkeit, eine Windrichtung, insbesondere aber auch eine für eine Betrachtung der Lasten relevante mittlere Jahreswindgeschwindigkeit oder eine Verteilung der Windgeschwindigkeiten und/oder -richtungen sein.

Als Betriebskennlinie wird vorzugsweise die im Bereich von Windenergieanlagen übliche Drehzahl-Leistungskennlinie herangezogen, die für verschiedene Drehzahlen n des Rotors eine einzuregelnde Leistung (genauer: einen für die Leistung indikativen Wert) wie die elektrische Leistung $P_{el}$ beziehungsweise die vom Rotor bereit zu stellende Luftspaltleistung oder auch ein Drehmoment am Generator angibt. Auch andere Kennlinien können als Betriebskennlinie im Sinne der Offenbarung verstanden werden, so ist beispielsweise eine als Pitchkennlinie bezeichnete Kennlinie, die den Pitchwinkel der Rotorblätter für eine gewisse Windgeschwindigkeit und/oder elektrische Leistung und/oder Luftspaltleistung angibt, vorstellbar. Auch andere Kennlinien sind als Betriebskennlinien vorstellbar.

Gemäß dem Aspekt kann demnach die Steigerung der maximal möglichen Leistung durch individuelle Anpassung der Betriebskennlinie bzw. des Betriebspunktes bspw. der Pitcheinstellungen zur Steigerung des Jahresenergieertrages beitragen. Insbesondere können die Randbedingungen wie Lastrandbedingung und Schallpegelrandbedingung ausgereizt werden, um Reserven gegenüber den Auslegungsbetriebslasten durch individuelle Anpassung der Betriebskennlinie und der Pitcheinstellungen zum Optimieren des Jahresenergieertrages einzusetzen.

Vorzugsweise umfasst das Anpassen des Betriebspunktes die folgenden Schritte:

- Bereitstellen des aktuellen Betriebspunktes der Windenergieanlage,

- Bestimmen je einer Anpassung der Betriebsführung der Windenergieanlage ausgehend von einer Änderung je eines der bestimmten Umgebungsparameter und dem aktuellen Betriebspunkt,

- Anpassen der Betriebsführung der Windenergieanlage ausgehend von einer Kombination der bestimmten Anpassungen unter Berücksichtigung der Randbedingungen.

Gemäß dieser Ausführung wird also ausgehend von einer individuellen Änderung eines der Umgebungsparameter eine individuelle Anpassung der Betriebsführung bestimmt. Diese Anpassungen können - je nach Fall - sich gegenseitig verstärkend wirken oder auch im Widerspruch zueinander stehen. Die Anpassung erfolgt dann erst nach Kombination der bestimmten individuellen Anpassungen, wobei zudem die Randbedingungen berücksichtigt werden. Damit kann die optimale Anpassung der Betriebsführung auch bei mehreren sich ändernden Umgebungsparametern erfolgen.

Beispielsweise kann die Anpassung für eine Änderung je eines der bestimmten Umgebungsparameter aus einer Liste möglicher Anpassungen ausgewählt werden. Vorzugsweise wird die Auswahl aus der Liste möglicher Anpassungen durch Berücksichtigung sämtlicher der Änderungen der Umgebungsparameter getroffen. Anders ausgedrückt können hier je Umgebungsparameter einer oder mehrere Anpassungskandidaten aus der Liste möglicher Anpassungen ausgewählt werden und die finale Anpassung aus dem einen oder den mehreren selektierten Anpassungskandidaten unter Berücksichtigung sämtlicher der bestimmten Umgebungsparameter ausgewählt werden. So ist in diesem Fall eine optimale Auswahl der geeigneten Maßnahme bzw. Anpassung für die Kombination von Umgebungsparametern möglich, ohne eine unnötige Restriktion auf eine bestimmte Anpassung schon für die individuellen Umgebungsparameter zu erfordern.

Vorzugsweise werden die Umgebungsparameter wiederkehrend, insbesondere periodisch und besonders bevorzugt kontinuierlich während des Betriebs der Windenergieanlage bestimmt.

Die Bestimmung des oder der Umgebungsparameter erfolgt beispielsweise mittels Messung. Alternativ oder zusätzlich werden die Umgebungsparameter berechnet und/oder approximiert.

Besonders bevorzugt erfolgt auch die Anpassung der Betriebsführung demnach dann wiederkehrend, insbesondere periodisch bzw. kontinuierlich.

Vorzugsweise umfasst die Anpassung des Betriebspunktes und/oder der Betriebskennlinie wenigstens eine der folgenden Maßnahmen, wenn die Berücksichtigung der Lastrandbedingung, einer Schallpegelrandbedingung und einer Leistungsrandbedingung wenigstens eine Lastreserve, eine Schallpegelreserve oder eine Leistungsreserve angibt:

- Anpassung, insbesondere Absenkung, eines Mindestblattwinkels und Anpassung, insbesondere Absenkung, der Schnelllaufzahl, um Abstand des Betriebspunktes zum Betriebspunkt mit optimalem Leistungsbeiwert zu reduzieren,

- Verlagern oder Verändern einer Kennlinie zum Steuern der Pitchwinkel der Rotorblätter, genannt Pitchkennlinie, hin zu höheren Pitchwinkeln für wenigstens einen Teil des Betriebsbereiches,

- Erhöhen einer Rotordrehzahl der Windenergieanlage,

- Anheben einer Nennleistung der Windenergieanlage.

Vorzugsweise umfasst die Anpassung wenigstens zwei der vorgenannten Maßnahmen, besonders bevorzugt umfasst die Anpassung wenigstens drei und insbesondere sämtliche der vorgenannten Maßnahmen.

Vorzugsweise umfasst das Bestimmen der Umgebungsparameter ein Bestimmen der Luftdichte, wobei eine Verringerung der Luftdichte zu einer Erhöhung einer Lastreserve und einer Schallpegelreserve führt und in Folge zum Anpassen der Betriebsführung eine Rotordrehzahl zum Kompensieren einer Änderung der Schnelllaufzahl unter Ausnutzung der Schallpegelreserve angepasst, insbesondere erhöht wird, und/oder eine Betriebskennlinie und/oder eine Pitchkennlinie unter Ausnutzung der Lastreserve angepasst wird.

Durch diese Anpassung kann eine durch geringere Dichte bzw. damit verbunden einen geringeren Luftmassenstrom verursachte Verringerung der Leistung zumindest teilweise kompensiert werden. In Abhängigkeit der Windenergieanlage kann eine Änderung der Drehzahl-Leistungskennlinie, entweder vollständig oder nur in einem Teillastbereich, also einem Bereich unterhalb einer Nennleistung bzw. einer Vollleistung, mit oder ohne Anpassung der Pitchführung optimal sein. Dies hängt insbesondere von dem Lastenhaushalt der Windenergieanlage sowie auch weiteren Umgebungsparametern, wie beispielsweise einer Turbulenzintensität, ab.

Gemäß eines weiteren Aspekts der Erfindung wird die Aufgabe durch ein Verfahren nach Anspruch 6 gelöst. Hierbei umfasst das Bestimmen des Umgebungsparameters der Scherung ein Bestimmen eines Scherkoeffizienten, wobei der Scherkoeffizient indikativ für eine Änderung in vertikaler Richtung einer Windgeschwindigkeit über eine Rotorebene eines Rotors der Windenergieanlage ist, eine Verringerung des Scherkoeffizienten einer gleichförmigeren Anströmung mit relativ geringeren Wechsellasten entspricht, der Scherkoeffizient mit einem vorbestimmten Scherschwellwert verglichen wird, der vorbestimmte Scherschwellwert dem Scherkoeffizienten mit einem Minimum der Leistungsausbeute entspricht und das Anpassen des Betriebspunktes abhängig von einer Änderung des Scherkoeffizienten und dem Vergleich des Scherkoeffizienten mit dem vorbestimmten Scherschwellwert erfolgt.

Zum Bestimmen des Scherschwellwertes wird beispielsweise in mindestens zwei verschiedenen Höhen z die Windgeschwindigkeit gemessen und aus der Differenz ein Scherungskoeffizient $\alpha$ gemäß dem logarithmischen und/oder dem Potentialgesetz, beispielsweise gemäß IEC 61400-1, abgeleitet bzw. gefittet:

$$u(z) = u(z_0)\left(\frac{z}{z_0}\right)^{\alpha}$$

Auch alternative Möglichkeiten zur Bestimmung des Scherschwellwertes, beispielsweise auf Basis von Akustikmessungen, insbesondere gemäß IEC 61400-11, sind vorstellbar.

Beispielsweise kann $\alpha = 0{,}5$ als obere Grenze bzw. als Jahresdurchschnitt festgelegt sein, wobei für kürzere Zeiten auch höhere Werte möglich sind. Auch ist es möglich, dass mehrere Scherschwellwerte für kurzfristige / mittelfristige und/oder langfristige Glättungen möglich sind, was eine besonders genaue Abstimmung auf die tatsächlich vorherrschenden Scherungen ermöglicht. In anderen Fällen sind auch Standorte mit negativen Scherungskoeffizienten $\alpha$ möglich.

Unterschiedliche Scherungskoeffizienten können beispielsweise je nach Anforderungen, tageweise / wochenweise / monatsweise, festgelegt sein, ohne darauf beschränkt zu sein.

Als Auslegungsscherkoeffizient wird vorzugsweise ein Wert zwischen 0,15 und 0,2 herangezogen, der sich als für einen typischen deutschen Küstenstandort geeignet herausgestellt hat. Vorzugsweise wird als Auslegungsscherkoeffizient ein Wert herangezogen, bei dem der Jahresenergieertrag ein Minimum erreicht. Anders ausgedrückt können dann in beiden Fällen bei einer Abweichung der Scherung von dem Auslegungsscherkoeffizienten Ertragssteigerungen erreicht werden, insofern die weiteren Randbedingungen eine entsprechende Steuerung der Windenergieanlage ermöglichen.

Vorzugsweise werden die Scherkoeffizienten vorab, also vor Errichtung der Windenergieanlage, mittels Messmasten, die am Standort der Windenergieanlage Windmessungen durchführen, ermittelt. Hierfür wird vorzugsweise die Windgeschwindigkeit wenigstens in zwei Höhen, besonders bevorzugt mehr als zwei Höhen, bestimmt. Auch ist eine abweichende Bestimmung, beispielsweise im Betrieb, möglich.

Vorzugsweise ist ein Leistungsreduktionsbereich als ein Wertebereich des Scherkoeffizienten definiert, für den eine reduzierte Geschwindigkeit in der unteren Hälfte der Rotorscheibe durch eine erhöhte Geschwindigkeit in der oberen Hälfte der Rotorscheibe nicht ausgeglichen werden kann und dadurch eine Leistungsreduktion erfolgt, wobei ein Scherkoeffizient an einem unteren Ende des Leistungsreduktionsbereiches als Auslegungsscherkoeffizient definiert ist, und wobei das Anpassen des Betriebspunktes abhängig von einer Änderung des Scherkoeffizienten und dem Vergleich des Scherkoeffizienten mit dem Auslegungsscherkoeffizienten erfolgt.

Abweichend von der zuvor beschriebenen bevorzugten Ausgestaltung wird hier nicht das Leistungsminimum, sondern der Auslegungsscherkoeffizient als Bewertung für das erfindungsgemäße Anpassen des Betriebspunktes herangezogen. In diesem Fall ist der Auslegungsscherkoeffizient als am unteren Ende des Leistungsreduktionsbereichs liegend definiert.

Vorzugsweise erfolgt in dem Fall, dass eine Verringerung des Scherkoeffizienten im Bereich unterhalb des Auslegungsscherkoeffizienten auftritt, das Anpassen des Betriebspunktes derart, dass die zusätzlichen Last- und/oder Anstellwinkelreserven zur Erhöhung des Jahresenergieertrages eine Erhöhung der Drehzahl und/oder einen aggressiveren Pitchverlauf, insbesondere bei individueller Einstellung (IPC) einzelner Rotorblätter, zur Folge haben.

Hier wird der Begriff des Pitchverlaufes und der der Pitchkennlinie synonym verwendet.

Vorzugsweise erfolgt in dem Fall, dass eine Erhöhung des Scherkoeffizienten im Bereich oberhalb des Auslegungsscherkoeffizienten aber innerhalb des Leistungsreduktionsbereichs auftritt, das Anpassen des Betriebspunktes derart, dass zur Einhaltung der nötigen Last- und/oder Anstellwinkelreserven wenigstens eine der folgenden Anpassungen erfolgt:

a) individuelle Einstellung der einzelnen Rotorblätter zur Reduktion der Lasten insbesondere in der oberen Hälfte der Rotorscheibe,

b) ein früheres Pitchen im oberen Teillastbereich zur Reduktion der Lasten und

c) Reduktion der Drehzahl zur Einhaltung der Lastgrenzen.

Vorzugsweise erfolgt in dem Fall, dass eine Erhöhung des Scherkoeffizienten im Bereich oberhalb des Auslegungsscherkoeffizienten und außerhalb des Leistungsreduktionsbereichs das Anpassen des Betriebspunktes derart, dass zur Einhaltung der nötigen Last- und/oder Anstellwinkelreserven wenigstens eine der folgenden Anpassungen erfolgt:

a) individuelle Einstellung der einzelnen Rotorblätter ohne Einbußen des Jahresenergieertrages,

b) ein früheres Pitchen im oberen Teillastbereich und

c) Reduktion der Drehzahl zur Reduktion der Lasten.

Die unterschiedlichen bevorzugten Ausgestaltungen betreffend den Scherkoeffizienten ermöglichen damit für sämtliche möglichen Änderungen der Umgebungsparameter eine konkrete Reaktion, um eine optimierten Steuerung der Windenergieanlage zu erreichen.

Gemäß dem ersten Aspekt der Erfindung umfasst das Bestimmen der Umgebungsparameter ein Bestimmen der Turbulenzintensität, wobei eine Reduktion der Turbulenzintensität eine Erhöhung einer Anstellwinkelreserve und eine Erhöhung einer Lastreserve bewirkt und wobei beim Feststellen einer Reduktion der Turbulenzintensität das Anpassen der Betriebsführung umfasst, dass

     a) eine Schnelllaufzahl und/oder ein Mindestblattwinkel im Teillastbereich zum Erhöhen der Leistung abgesenkt wird und

     b) die Pitchkennlinie im oberen Teillastbereich hin zu höheren Leistungen verschoben wird, um die entstandenen Last- und Anstellwinkelreserven zu kompensieren, oder

     c) zusätzlich zu a) und alternativ zu b) eine Rotordrehzahl der Windenergieanlage unter Berücksichtigung der Schallpegelrandbedingung erhöht wird.

In dieser Ausführung wird demnach ermöglicht, wie die Steuerung der Windenergieanlage auf Änderungen der Turbulenzintensität optimal reagiert.

Vorzugsweise umfasst das Bestimmen der Umgebungsparameter ein Bestimmen der Temperatur und der Luftdichte, wobei eine Reduktion der Temperatur bei gleichbleibender Dichte zu thermischen Reserven in einem elektrischen Strang der Windenergieanlage führen, wobei beim Feststellen einer thermischen Reserve das Anpassen der Betriebsführung umfasst, dass eine Leistung angehoben wird, entweder als temporäre Leistungssteigerung oder als dauerhafte Nennleistungssteigerung, wobei das Anheben der Leistung in Abhängigkeit der Schallpegelrandbedingung

     a) ein Anheben der Drehzahl des Rotors bei vorhandener Schallpegelreserve und/ oder

     b) ein Anheben des Drehmomentes ohne vorhandene Schallpegelreserve umfasst.

In dieser Ausführung wird demnach offenbart, wie eine optimale Steuerung der Windenergieanlage für eine veränderte Temperatur bei gleicher Luftdichte erfolgt.

Gemäß einem weiteren Aspekt der Erfindung wird die Aufgabe durch ein Verfahren gemäß Anspruch 12 gelöst. Hierbei umfasst das Bestimmen der Umgebungsparameter ein Bestimmen der Scherung und der Turbulenzintensität, wobei ein Einfluss der Scherung und der Turbulenzintensität auf die Last- und die Anstellwinkelreserve verrechnet wird und das Anpassen der Betriebsführung in Abhängigkeit der Last- und Anstellwinkelreserve wenigstens eine der folgenden Maßnahmen umfasst

     a) Anpassen der Pitchkennlinie, insbesondere im Teillastbereich bei vorhandenen Last- und Anstellwinkelreserven Herabsetzen des Mindestblattwinkels und/oder der Schnelllaufzahl; und

     b) Kurzfristiges Erhöhen der Nennleistung, um die Böigkeit des Windes auszugleichen.

In dieser Ausführung wird demnach offenbart, wie eine optimale Steuerung der Windenergieanlage für eine Kombination der Parameter Scherung und Turbulenzintensität erfolgt.

Der Mindestblattwinkel ist in einer Ausführung ein für alle Blätter aif den gleichen Wert festgelegter und über den kompletten Rotorumlauf konstanter Blattwinkel. In einer bevorzugten Ausführung ist ein Mindestblattwinkel für jedes Rotorblatt individuell festgelegt. Alternativ oder zusätzlich ist in einer besonders bevorzugten Ausführung ein Mindestblattwinkel als Funktion der Winkelposition des Blattes festgelegt. So kann beispielsweise eine sinusförmige oder andersartige Schwankung um einen bestimmten Blattwinkel mit der Periode einer Rotorumdrehung festgelegt sein.

Vorzugsweise umfasst das Bestimmen der Umgebungsparameter ein Bestimmen der Luftdichte und der Turbulenzintensität, wobei in dem Fall, dass sowohl die Luftdichte und die Turbulenzintensität steigen ein höherer Jahresenergieertrag, höhere Lasten und ein höherer Schallleistungspegel folgt, wobei in diesem Fall das Anpassen der Betriebsführung wenigstens eine der folgenden Maßnahmen umfasst

     a) Veränderung der Pitchkennlinie unter Abwägung der sinkenden Anstellwinkel durch gestiegene Luftdichte und der steigenden Anstellwinkel durch gestiegene Turbulenzintensität;

     b) Reduzieren der Drehzahl zur Reduktion der Lasten und des Schallleistungspegels; und

     c) Erhöhen einer Anstellwinkelreserve im Teillastbereich durch Erhöhung der Schnelllaufzahl und/oder des Mindestblattwinkels,

Vorzugsweise werden in dem Fall, dass sowohl die Luftdichte und die Turbulenzintensität sinken, wenigstens eine, wenigstens beide und besonders bevorzugt sämtliche, der Maßnahmen a), b) und c) invertiert zur Anpassung der Betriebsführung herangezogen.

In dieser Ausführung und den beiden nachfolgend beschriebenen Ausführungen werden demnach die Steuerung für alle möglichen Kombination der Umgebungsparameter Dichte und Turbulenzintensität beschrieben.

Vorzugsweise umfasst das Bestimmen der Umgebungsparameter ein Bestimmen der Luftdichte und der Turbulenzintensität, wobei in dem Fall, dass die Luftdichte steigt und die Turbulenzintensität sinkt ein Kompensieren der Auswirkungen auf Lasten und Schall erfolgt, wobei in diesem Fall das Anpassen der Betriebsführung aufgrund der gestiegenen Anstellwinkelgrenzen wenigstens eine der folgenden Maßnahmen umfasst

a) Veränderung der Pitchkennlinie zur Erhöhung des Jahresenergieertrages;

b) Absenken der Drehzahl zur Kompensation der angestiegenen Lasten, insbesondere der Lastmittelwerte.

Vorzugsweise umfasst das Bestimmen der Umgebungsparameter ein Bestimmen der Luftdichte und der Turbulenzintensität, wobei in dem Fall, dass die Luftdichte sinkt und die Turbulenzintensität steigt ein Kompensieren der Auswirkungen auf Lasten und Schall erfolgt, wobei in diesem Fall das Anpassen der Betriebsführung zur Kompensation der gesunkenen Anstellwinkelgrenzen wenigstens eine der folgenden Maßnahmen umfasst

a) Veränderung der Pitchkennlinie durch früheres Pitchen;

b) Erhöhen der Drehzahl.

In einer Ausführung umfasst das Bestimmen der Umgebungsparameter ein Bestimmen der Luftdichte und der Temperatur, wobei in dem Fall, dass die Temperatur sinkt und die Luftdichte steigt in Abhängigkeit insbesondere der Schallpegelrandbedingung das Anpassen der Betriebsführung wenigstens eine der folgenden Maßnahmen umfasst

a) Anheben der Nennleistung unter gleichzeitigem Absenken der Drehzahl zur Einhaltung der Schallpegelrandbedingung, bei unkritischer Schallpegelrandbedingung Absenken nur bis zur Einhaltung der Lastrandbedingung;

b) Gegebenenfalls Steigerung des Pitches bis zur Einhaltung der Lastrandbedingung.

Somit ist in dieser Ausführung die Steuerung auf kombinierte Änderungen der Luftdichte und der Temperatur optimiert. Hierbei können thermische Reserven aus niedriger Temperatur, niedrigere Lastreserven und niedrigere Schallreserven aus höherer Dichte miteinander kombiniert werden.

Es wird eine Windenergieanlage mit einer Steuerung beschrieben, wobei die Steuerung dazu eingerichtet ist, die Windenergieanlage nach einem Verfahren gemäß der Offenbarung zu steuern.

Die Windenergieanlage ermöglicht die gleichen Vorteile zu erreichen, wie sie im Zusammenhang mit dem Verfahren gemäß der Offenbarung beschrieben sind. Besonders kann die Steuerung der Windenergieanlage zur Durchführung einer, mehrerer oder sämtlicher der als bevorzugt beschriebenen Ausführungen ausgestaltet sein und die damit verbundene optimierte Steuerung erreichen.

Ferner wird ein Windpark mit mehreren Windenergieanlagen gemäß der Offenbarung beschrieben.

Auch der Windpark ermöglicht die gleichen Vorteile zu erreichen, wie sie im Zusammenhang mit dem Verfahren gemäß der Offenbarung beschrieben sind. Besonders kann die Steuerung der mehreren Windenergieanlagen des Windparks zur Durchführung einer, mehrerer oder sämtlicher der als bevorzugt beschriebenen Ausführungen ausgestaltet sein und die damit verbundene optimierte Steuerung erreichen.

Weitere Vorteile und bevorzugte Ausgestaltungen werden nachfolgend unter Bezugnahme auf die beigefügten Figuren im Detail beschrieben. Hierbei zeigen:

Fig. 1 schematisch und exemplarisch eine Windenergieanlage;

Fig. 2 schematisch und exemplarisch einen Windpark;

Fig. 3 schematisch und exemplarisch Zusammenhänge von Schallleistungspegel, Lastpegel und Leistung für unterschiedliche Betriebsführungen;

Fig. 4 schematisch und exemplarisch Zusammenhänge von Jahresenergieertrag und Scherungskoeffizient;

Fig. 5 schematisch und exemplarisch Zusammenhänge von Schallleistungspegel, Lastpegel und Leistung für unterschiedliche Betriebsführungen; und

Fig. 6 schematisch und exemplarisch Zusammenhänge von Schallleistungspegel, Lastpegel und Leistung für unterschiedliche Betriebsführungen.

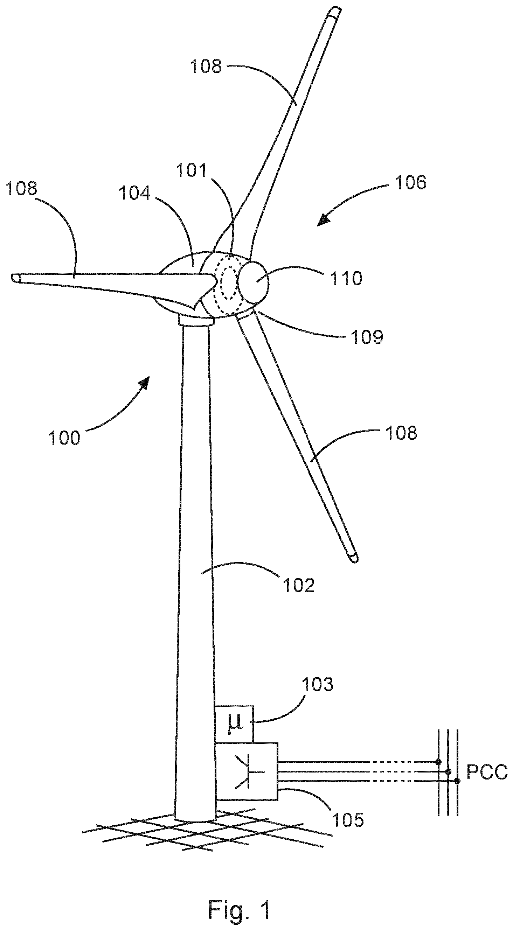

Fig. 1 zeigt eine schematische Darstellung einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

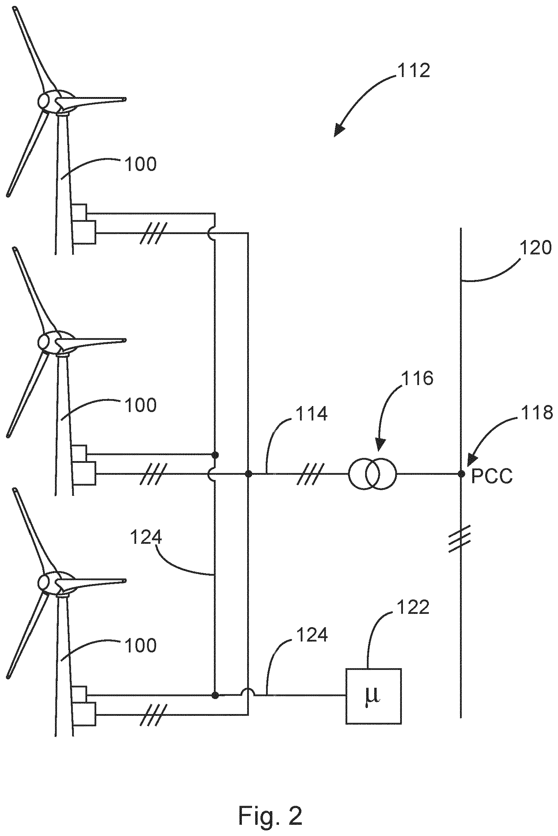

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

Standorte werden zunehmend komplexer und individueller in ihren Anforderungen. Daher wird der Ruf nach einer individuellen Betriebsweise lauter, der die Einstellung des Ertrages aus dem Garantiedatenblatt ermöglicht. Allerdings wird das Garantiedatenblatt mit standardisierten Idealwerten errechnet, die ein statistisches Mittel des Windfeldes und der Umgebungsbedingungen abbilden.

Die individuelle Betriebsweise schlägt vor, die Betriebsweisen auf die tatsächlich am Standort vorliegenden Parameter aus Umgebungsbedingungen wie Windfeld, Klima, Blattverformung und Anlagenposition anzupassen. An der Anlage können Drehzahl (sowohl Verlauf als auch Nenn- und Solldrehzahl), Pitchwinkel und Nennleistung verändert werden um maximalen Ertrag zu erzielen. In der vorliegenden Offenbarung wird ein Weg vorgeschlagen, wie diese einstellbaren Parameter für sich ändernde Umgebungsparameter für den Anlagenertrag optimal einzustellen bzw. anzupassen sind.

Dabei sollen die Randbedingungen aus maximalem Schallleistungspegel, maximalen Lasten, Reglerstabilität und Generatorkenngrößen eingehalten werden. Dabei ist zu beachten, dass sich bestimmte Verhaltensweisen nicht-linear verstärken.

Beispielsweise führt eine geringere Turbulenzintensität bereits zu einem reduzierten Schallleistungspegel. Durch die geringere Ablösungsneigung der Strömung am Blatt wird in diesem Fall zusätzlich der Hinterkantenlärm reduziert. Da auch die Lasten an Standorten mit geringerer Turbulenz sinken, kann der gewonnene Spielraum gemäß der vorliegenden Offenbarung in eine erhöhte Maximaldrehzahl investiert werden, welche zu höheren Erträgen führt unter gleichzeitiger Einhaltung der Auslegungslasten und der Schallgarantie.

Bei einer stärkeren Versteifung des Blattes, durch erhöhte Fliehkräfte nach einer Drehzahlerhöhung, verringert sich die elastische Verformung des Blattes. Dies reduziert die lokalen Anstellwinkel, weshalb die Pitchwinkel ebenfalls reduziert werden können, wobei gleichzeitig die Anstellwinkelreserven eingehalten werden.

Im ersten Schritt kann eine individuelle Betriebsführung als diskrete Betriebskennlinie ausgelegt werden. Diese wird optimal auf die mittleren Windbedingungen am Standort ausgelegt. Sie ist über die gesamte Lebensdauer der Anlage aktiv.

Im zweiten Schritt wird ein mehrdimensionaler Parameterraum auf die Anlagensteuerung eingespielt. Die Sensorik der Anlage misst dabei permanent das Windfeld, die Umgebungsbedingungen, den Zustand der Anlage und ggf. auch Schall an einem definierten Immisionspunkt.

Die Regelungstechnik, die in der Anlagensteuerung 103 implementiert ist, ermittelt vorzugsweise auf Basis der aufgenommenen Werte selbstständig und in Echtzeit einen gültigen Parametersatz aus Drehzahl und Blattwinkeleinstellung um die maximale Leistung zu erzielen und dabei eventuelle Schallpegel einzuhalten. Dabei sollen die Randbedingungen aus Schallleistungspegel, Lasten, Reglerstabilität, Bereiche der Komponenteneigenfrequenzen, beispielsweise Drehzahlfenster, und Generatorkenngrößen eingehalten werden.

So ist beispielsweise eine Leistungssteigerung nötig, wenn eine geringere Turbulenzintensität, eine geringere Dichte, eine geringere Scherung oder eine stärker asymmetrische Windverteilung vorherrschen (Weibullfaktor < 2). Dies führt respektive zu einer geringeren Leistungsentnahme aus dem Wind, einem geringeren Schallleistungspegel, einer geringeren Propagation des Schalls, geringeren Wechsellasten, einer geringeren Verformung sowie einem erhöhten Abstand zu den Anstellwinkelreserven gegenüber einer Ablösung am Blatt. Demnach kann eine Drehzahl erhöht werden und/oder Anstellwinkelreserven durch geringeren Pitch verringert werden. Als Ergebnis kann der maximal mögliche Ertrag erzielt werden.

In einem anderen Beispiel ist eine Lastreduktion in einem Fall möglich, in dem eine erhöhte Turbulenzintensität, eine erhöhte Dichte, eine erhöhte Scherung oder eine stark symmetrische Windverteilung (Weibullfaktor > 2) vorliegen bzw. bestimmt werden. Dann resultiert respektive eine stärkere Leistungsentnahme aus dem Wind, ein erhöhter Schallleistungspegel, eine stärkere Propagation des Schalls, erhöhte Wechsellasten, erhöhte Verformungslasten sowie ein geringerer Abstand zu den Anstellwinkelreserven gegenüber einer Ablösung am Blatt. Als Reaktion ist eine Verringerung der Drehzahl oder eine Vergrößerung der Anstellwinkelreserven durch geringeren Pitch angezeigt. Dadurch wird der garantierte Ertrag beibehalten, der Schallleistungspegel reduziert und die Wechsellasten zum Einhalten der Wartungsintervalle und Lebensdauerberechnungen verringert.

Die standortspezifischen Parameter, die auch als Umgebungsbedingungen bezeichnet werden, lassen sich wie folgt gliedern.

Das Windfeld wird dabei bestimmt aus den gemittelten und in ihren extremen Werten für eine oder mehrere, insbesondere auch sämtliche aus

> a) Turbulenzintensität
>
> b) Scherung (Shear)
>
> c) Rotation der Windgeschwindigkeit über Höhe (Veer)
>
> d) Windrichung (Yaw)
>
> e) Windhäufigkeit, Form der Weibullverteilung
>
> f) Anströmwinkel der Rotorfläche (Flow inclination)

Das Klima lässt sich bestimmen aus einem oder mehreren, insbesondere sämtlichen der Werte

> a) Dichte
>
> b) Temperatur
>
> c) Feuchte
>
> d) Niederschlagshäufigkeit.

Die Anlagenposition beschreibt die Position im Windpark 102, also relativ zu anderen Windenergieanlagen 100 sowie Im Gelände, also relativ zu orographischen Besonderheiten (Bergen, Tälern, Wäldern)

Der Zustand der Anlage wird beschrieben durch einen oder mehrere, insbesondere sämtliche der Parameter

> a) Anstellwinkel am Blatt
>
> b) die momentanen Lastzustände am Blatt
>
> c) die Beschleunigungen, um gefährliche Vibrationen aus den diversen Komponenten zu umgehen.

Die möglichen Maßnahmen umfassen, um auf veränderte Umgebungsparameter zu reagieren, eine, mehrere oder sämtliche der folgenden Anpassungen des Betriebspunktes beziehungsweise der Betriebsführung:

> (1) Anlage dichter am cp-Optimum betreiben, durch Absenkung des Mindestblattwinkels $\alpha_{mins}$ und Absenkung der Schnelllaufzahl $\lambda$
>
> (2) später pitchen, also eine Blattwinkelerhöhung bei höheren Windgeschwindigkeiten und/oder höherer Leistung durchführen
>
> (3) Drehzahl des Rotors anheben
>
> (4) Nennleistung anheben.

Bei in der Gegenrichtung veränderten Umgebungsparametern ist entsprechend eine umgekehrte Anpassung des Betriebspunktes angezeigt.

Als Leistung ist hier und im gesamten Kontext der vorliegenden Anmeldung vorzugsweise die erzeugte elektrische Leistung oder ein anderes Maß für die Leistung der Windenergieanlage zu verstehen. Beispielsweise eignet sich ebenso die Luftspaltleistung oder ein Drehmoment als Generator als für die Leistung indikativer Wert.

Die genauen Auswirkungen von sich verändernden Umgebungsparametern werden nachfolgend für die einzelnen Umgebungsparameter sowie Kombinationen von Umgebungsparametern ausgewertet.

Einfluss auf eine Windenergieanlage 100 durch veränderte Dichte; Hintergrundinformationen

• Die elektrische Leistung berechnet sich mittels

$$P = \rho \eta_{el} c_p \pi r^2 v_{inv}^3$$

und ist somit linear zur Dichte $\rho$.

• Gleichzeitig führt aber eine niedrigere Dichte dazu, dass die Windenergieanlage 100 für die gleiche elektrische Leistung P mehr Wind benötigt, was zu einem geänderten $\lambda$ (TSR, Schnelllaufzahl) führen

würde. Die Windenergieanlage 100 kann dem zwar entgegensteuern, aber nur im Teillastbereich, da eine Erhöhung der Drehzahl bzw. des TSR im Nennpunkt zu erhöhtem Schallleistungspegel führt.

- Kann das TSR im Bereich vor Nennleistung nicht angepasst werden, führt dies zu einem aerodynamisch schlechterem Cp bzw. Betriebspunkt der Windenergieanlage 100.

- Der exakte AEP-Verlust hängt allerdings von Profilserie, Blattentwurf und evtl. verwendeten Anbauteilen wie Vortex-Generatoren, Serrations und beispielsweise Klappen sowie zusätzlichen Eingriffen in die Pitchführung ab, und kann nur von Windenergieanlage 100 zu Windenergieanlage 100 genau beziffert werden. Ebenfalls kann dieser nicht völlig losgelöst von Turbulenzintensität und Shear betrachtet werden.

- Sinkt die Dichte unter die Auslegungsdichte, ist zunächst mit Ertragseinbußen zu rechnen bzw. wird auch Nennleistung erst später erreicht, siehe oben.

- Gleichzeitig sinken aber auch Lasten und Schall, wobei es für Schall bereits einen bekannten näherungsweisen Zusammenhang gibt.

- Aus der Reduktion von Schall folgt, dass prinzipiell die gesamte Betriebskennlinie mit der Dichte (3. Wurzel der Dichte) skaliert werden kann, einschließlich der Nenndrehzahl der Windenergieanlage 100.

- Gleichzeitig folgt aus der Reduktion der Dichte auch eine Reduktion der Lasten, insbesondere für die Mittelwerte der Blattlasten (My) und den Anlagenschub bzw. den Ct-Koeffizienten. Dies ergibt zumindest für bestimmte Anlagenkomponenten (z.B. Turm, Schlagmoment, Azimuth, Pitch) Spielraum für eine "aggressivere" Betriebsführung. Dies kann z.B. durch Anpassung der Betriebskennlinie und/oder der Pitchkennlinie gestaltet werden. Beispielsweise kann hier Raum für eine Absenkung der Anstellwinkelreserve sein.

- Schneller drehen: max. SPL bleibt aufgrund der geringeren Dichte noch unter SPL bei Auslegungsdichte. Zusätzliche Lastreserven einiger Komponenten werden wieder aufgebraucht. Extremlasten sind hierbei üblicherweise nicht betroffen. Manche Lasten (z.B. Schlagmoment) werden aber erhöht. Zusätzlich kann Erosion der Blattvorderkante ein Problem sein. Erosion ist aber ebenfalls standortabhängig (Regenhäufigkeit). Bei vorhandenem Regensensor könnte bei Regen zur Vermeidung übermäßiger Erosion auf eine erhöhte Solldrehzahl verzichtet werden. Als Ergebnis werden die AEP-Verluste, die sich quasi unumgänglich durch die niedrigere Dichte ergeben, unter weitestgehend identischen Lasten und nach wie vor konformen Schallleistungspegeln minimiert.

- Durch das schnellere Drehen (z.B. zumindest im Teillastbereich) werden Anstellwinkelreserven beibehalten. Verfügt eine Anlage unter Standardeinstellungen über genügend Anstellwinkelreserven, können diese durch eine etwas aggressivere Pitchführung aufgebraucht werden. Lastreserven würden dann durch eine Kombination aus geänderter Betriebskennlinie und Pitchkennlinie aufgebraucht werden. Hier würde es aber zu einer Erhöhung der Extremlasten kommen, evtl. auch der Schwingungsamplituden in Schlagrichtung.

- Je nach Anlage kann eine Änderung der Drehzahl-Leistungskennlinie (komplett oder nur Teillastbereich) mit/ohne Anpassung der Pitchführung optimal sein, je nach Lastenhaushalt der Windenergieanlage 100 sowie evtl. weiterer Standortparameter wie z.B. Turbulenzintensität.

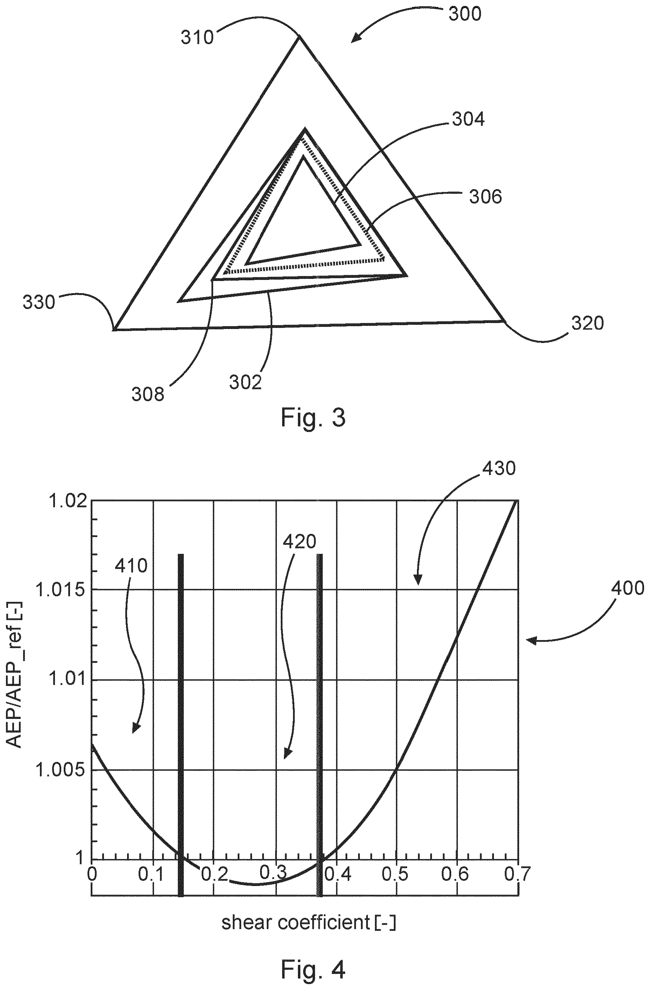

Fig. 3 zeigt schematisch und exemplarisch die Zusammenhänge von Schallleistungspegel 310, Lastpegel 320 und Leistung 330 in einem dreiachsigen Diagramm 300. Der Lastpegel 320 entspricht im Wesentlichen dem Inversen der zu erwartenden Lebensdauer.

Für Normluftdichte, also den Auslegungsfall, wird der Zustand 302 erwartet. Dieser bietet unter den zulässigen Rahmenbedingungen für Schallleistungspegel 310, Lastpegel 320 die maximale Leistung 330. Bei Beibehaltung der Betriebsführung stellt sich für eine gegenüber der Normluftdichte verringerte Luftdichte der Zustand 304 ein. Es kann gesehen werden, dass bei geringerem Schallleistungspegel 310 und geringerem Lastpegel 320 auch eine niedrigere Leistung 330 erreicht wird.

Durch Anpassung der Betriebsführung gemäß der vorliegenden Offenbarung stellt sich der Zustand 306 ein. Die Anpassungen umfassen für den Zustand 306 insbesondere ein schärferes Pitchen zur Reduktion der Anstellwinkelreserven und eine geringfügige Erhöhung der Drehzahl. Der Zustand 306 erfüllt ebenso wie der Auslegungszustand 302 die Anforderungen an den Schallleistungspegel 310 und führt gegenüber der unveränderten Betriebsführung im Zustand 304 zu einem Zugewinn an Leistung 330.

Der Zustand 306 bietet immer noch im Bereich der Lasten Reserven, so dass ein weiterer Zugewinn an Leistung 330 durch den Zustand 308 erreicht wird, indem die Betriebsführung weiter gemäß der vorliegenden Offenbarung angepasst wird. Für den Zustand 308 wurde gegenüber dem Auslegungsfall die Drehzahl stark erhöht, um die Lastreserven auszuschöpfen.

Einfluss auf eine Windenergieanlage 100 durch verschiedene Scherungswerte; Hintergrundinformationen

Der Scherungskoeffizient beschreibt, wie stark sich die Windgeschwindigkeit über die Höhe der Rotorkreisscheibe verändert.
Fig. 4 zeigt schematisch und exemplarisch ein Diagramm 400 des Verlaufes des Jahresenergieertrages AEP relativ zu einem Referenzenergieertrag AEPref auf der vertikalen Achse über Werte des Scherungskoeffizienten auf der horizontalen Achse:

- Geringe Scherungskoeffizienten bedeuten gleichförmige Anströmung mit relativ geringen Wechsellasten durch das Windfeld.

- Mit steigendem Scherungskoeffizienten steigen Unterschiede in Anströmgeschwindigkeit über Rotorfläche und damit Amplitude der Lastwechsel durch das Windfeld und der Anstellwinkel entlang des Rotorblattes.

- In bestimmten Wertebereichen des Scherungskoeffizienten kann eine reduzierte Geschwindigkeit in der unteren Rotorscheibenhälfte durch eine Übergeschwindigkeit in der oberen Rotorscheibenhälfte nicht ausgeglichen werden, was zu einer Leistungsreduktion führt. → Leistungsreduktion; In dem Beispiel der Fig. 4 entspricht dies einem Bereich 420 des Scherungskoeffizienten von 0.15-0.38.

- Oberhalb und Unterhalb des Bereichs 420 wird die reduzierte Geschwindigkeit in der unteren Rotorscheibenhälfte durch Übergeschwindigkeit in der oberen Rotorhälfte überkompensiert, was zu einer Leistungssteigerung führt. Dies betrifft den Bereich 410 mit einem Scherungskoeffizienten < 0.15 und den Bereich 430 mit einem Scherungskoeffizienten > 0.38.

Scherung sinkt/ist niedriger als Auslegungs-Scherung (beispielsweise 0.15) und AEP steigt (Bereich 420 in Fig. 4)

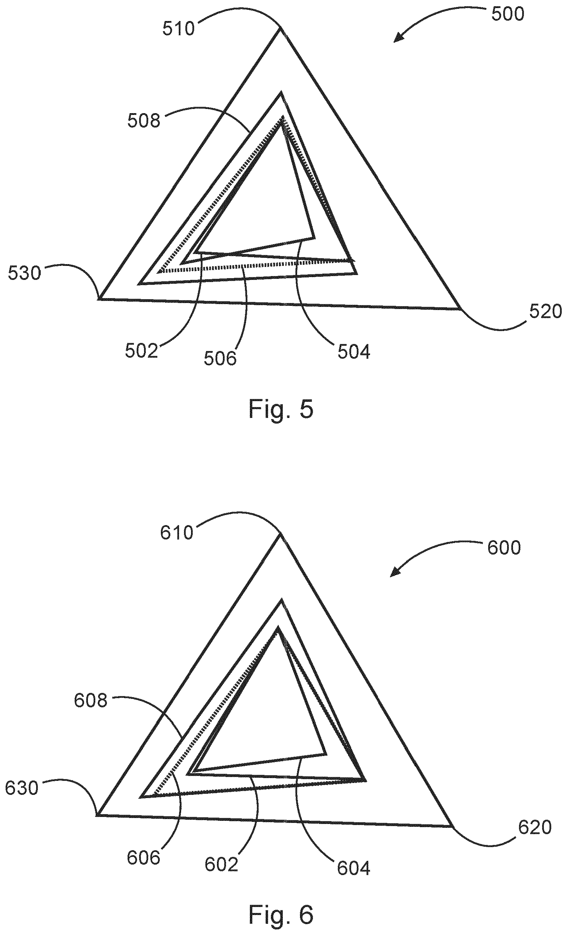

Fig. 5 zeigt schematisch und exemplarisch die Zusammenhänge von Schallleistungspegel 510, Lastpegel 520 und Leistung 530 in einem dreiachsigen Diagramm 500 analog zu der Darstellung in Fig. 3 bei sinkender Scherung bzw. bei einer Scherung unterhalb der Auslegungs-Scherung.

- Liegt an einem Standort die Scherung der Anströmung niedriger als im Auslegungsfall (zweitinnerster Fall, Zustand 502), erfährt die Windenergieanlage 100 geringere Amplituden in den Wechsellasten und geringere Schwankungen in den Anstellwinkeln (innerster Fall, Zustand 504).

- Eine Änderung der Schallleistungspegel ist nur indirekt über veränderte Anstellwinkel entlang des Blattes gegeben und vernachlässigbar gering.

- Die entstandenen Reserven in den Lasten und den Anstellwinkelreserven zur weiteren Steigerung des AEP können durch aggressiveren Pitchverlauf gehoben werden (2). (Zustand 506).

- Ist der Standort frei von Schallrestriktionen, können die entstandenen Lastreserven durch eine zusätzliche Drehzahlsteigerung gehoben werden (3) (Zustand 508).

- Zur optimalen Nutzung der Anstellwinkelreserven kann in jedem Fall eine Regelung über IPC erfolgen.

Scherung steigt/ist größer als Auslegungs-Scherung (beispielsweise 0.15) und AEP sinkt (Bereich 420 in Fig. 4)

- Steigt die Scherung gegenüber dem Auslegungspunkt und sinkt gleichzeitig das AEP, erfährt die Windenergieanlage 100 steigende Amplituden in den Wechsellasten und den Anstellwinkeln die durch Drehzahlerhöhung und späteres Pitchen im oberen Teillastbereich nicht auszugleichen ist. Durch die Verschärfung der Anstellwinkel steigt der Schallleistungspegel minimal an.

- Um die Reserven in den Anstellwinkeln und Lasten weiterhin einhalten zu können, wird über ein IPC für jedes Blatt die Reserve eingestellt (AEP-neutral) oder im oberen Teillastbereich früher gepitcht werden (AEP-reduzierend).

- Als Lastreduktionsmaßnahme kann die Drehzahl ebenfalls reduziert werden (3 invers).

Scherung steigt/ ist größer als Auslegungs-Scherung (beispielsweise 0.15) und AEP steigt (Bereich 430 in Fig. 4)

- Steigt die Scherung gegenüber dem Auslegungspunkt, erfährt die Anlage weiter steigende Amplituden in den Wechsellasten und den Anstellwinkeln. Durch die Verschärfung der Anstellwinkel steigt der Schallleistungspegel minimal an.

- Da das AEP steigt, kann dieser Freiraum genutzt werden, um durch eine Reduktion der Drehzahl die Lastengrenzen einzuhalten. Alternativ können durch früheres Pitchen im oberen Teillastbereich Lasten reduziert und Anstellwinkelgrenzen eingehalten werden (2 invers).

- IPC eignet sich ebenfalls zur Einstellung der Anstellwinkelgrenzen während des Blattumlaufs und zur Lastreduktion insbesondere in der oberen Rotorscheibenhälfte.

Einfluss auf eine Windenergieanlage 100 durch veränderte Turbulenz (hier niedriger); Hintergrundinformationen

Fig. 6 zeigt schematisch und exemplarisch die Zusammenhänge von Schallleistungspegel 610, Lastpegel 620 und Leistung 630 in einem dreiachsigen Diagramm 600 analog zu der Darstellung in Fig. 3 bei sinkender Turbulenz.

- Stellt sich an einem Standort die Turbulenz niedriger dar als für den Auslegungsfall (zweitinnerster Zustand 602) besitzt die Anlage größere Anstellwinkelreserven und Lastreserven als notwendig, sowie durch den sinkenden InflowNoise Anteil zusätzliche leichte akustische Reserven (innerster Zustand 604).

- Die entstandenen Reserven in den Anstellwinkel kann man dafür nutzen um im Teillastbereich die Schnelllaufzahl leicht abzusenken und das $\alpha_{min}$ leicht abzusenken, was zu einer verbesserten Leistung führt (1). Gleichzeitig können die Reserven in den Anstellwinkeln und den Lasten dazu verwendet werden, um im hohen Teillastbereich später zu pitchen und damit ebenfalls die Leistung zu steigern (2). Akustisch werden durch die höheren Anstellwinkel und die dickere Grenzschicht leicht höhere Pegel erwartet, die die entstandenen kleinen Reserven in etwa kompensieren sollten (Zustand 606). Akustisch ist der Zustand 606 gleich dem Auslegungsfall.

- Sollten die gewonnenen Lastreserven geeignet sein, um eine leichte Erhöhung der Maximaldrehzahl zu erlauben, kann zusätzlich zu (1) und anstatt (2) eine Drehzahl Anhebung (3) umgesetzt werden (Zustand 608). Diese Maßnahme führt zu einer stärkeren Leistungssteigerung als (2), führt aber gleichzeitig auch zu einer Erhöhung der Schallleistungspegel über den Auslegungsfall hinaus und ist damit nur für Standorte ohne einschränkende Schallauflagen möglich.

Einfluss auf eine Windenergieanlage 100 durch veränderte (hier niedrigere) Temperatur (bei gleichbleibender Dichte); Hintergrundinformationen

- Zunächst einmal wird hier angenommen, dass nur die Temperatur unter Auslegungstemperatur sinkt, die Dichte jedoch auf dem Auslegungswert bleibt (Annahme wäre zum Beispiel für einen geodätisch leicht erhöhten Standort im Alpenvorland zutreffend). Zeigt sich die Temperatur an einem Standort niedriger als die Auslegungstemperatur, ergeben sich thermische Reserven im elektrischen Strang.

- Diese könnten gehoben werden, indem die Nennleistung angehoben wird (4) (entweder als temporäre Leistungssteigerung oder als dauerhafte Nennleistungssteigerung).

- Je nachdem ob eine Schallrandbedingung besteht oder nicht, kann die hiermit verbundene Laststeigerung unterschiedlich aufgefangen werden: Sollte der Standort schallkritisch sein, muss die Drehzahl identisch bleiben und es bleibt nur die Option das Drehmoment anzuheben um auf die höhere Nennleistung zu kommen. Dies führt zu erhöhten Mittelwerten im Mx.

- Liegen keine einschränkenden Schallauflagen vor, kann alternativ das Drehmoment konstant gehalten und die Drehzahl leicht angehoben werden (3). Dadurch bleiben die Mx-Mittelwerte identisch zum Auslegungsfall. Unter Beibehaltung des des Gradienten der Pitchkennlinie bis zur neuen Nennleistung bleiben zudem die Mittelwerte für My und Schub konstant. Die Drehzahlsteigerung führt aber zu einer leichten Anhebung der Anzahl der Lastzyklen/Kollektive für Mx, My und Schub.

Scherung sinkt, Turbulenzintensität steigt

- Der Einfluss von Scherung auf den Ertrag ist nichtlinear, aber von der Richtung/Tendenz identisch für den gesamten Leistungsbereich.

- Turbulenzintensität führt hingegen im Teillastbereich zu mehr Ertrag, im Bereich um Nennleistung aber zu einem Minderertrag.

- Steigende Scherung und Steigende Turbulenzintensität führen beide zu erhöhten Wechsellasten und beide zu erhöhtem SPL, damit verbunden führen beide auch zu geringeren Anstellwinkelreserven.

- Meist sind Scherung und Turbulenzintensität verbunden, z.B. nachts (stabile Schichtung der Atmosphäre) geringe Turbulenzintensität und hohe Scherung, Tags (Strahlungs-/Sonnentage, hohe Thermik) ist die Turbulenzintensität hoch, die Scherung aber niedrig.

- Höhere Turbulenzintensität führt zu erhöhten Lasten und niedrigerem Ertrag vor Nennleistung. Außerdem werden Anstellwinkelreserven verringert.

    ○ Turbulenzintensität führt zu erhöhten Anstellwinkeln insbesondere im Blattinnenbereich bis Blattmittenbereich.

    ○ Niedrige Scherung kann Anstellwinkelreserven im Blattaußenbereich "schonen" und der Lasterhöhung entgegenwirken.

- Um erhöhte Turbulenzintensität vor Nennleistung auszugleichen, kann der Einfluss von Turbulenzintensität und Scherung "verrechnet" werden, sowohl für die Lasten als auch die Anstellwinkelreserve, wobei die Anstellwinkelreserven hauptsächlich im Blattaußenbereich relevant sind.

- Bleiben genügend Reserven übrig, kann im Bereich um Nennleistung aggressiver gepitcht werden (2) und/oder aber die Nennleistung kurzfristig erhöht werden, um die Böigkeit des Windes auszugleichen (4).

- Im Teillastbereich (geringe Windgeschwindigkeit) profitiert die Windenergieanlage 100 typischerweise von der erhöhten Turbulenzintensität, lasterhöhende Maßnahmen müssen nicht ergriffen werden um die Leistung zu erhöhen. Bei entsprechender Reserve - nach Verrechnen mit Pitch - ist aber ein Herabsetzen von $\alpha_{min}$ und/oder der Schnelllaufzahl möglich (1).

## Scherung steigt, Turbulenzintensität sinkt

- Hohe Scherung führt zu niedrigeren Anstellwinkelreserven und erhöhten Wechsellasten. Gleichzeitig führt niedrige Turbulenzintensität zu niedrigeren Lasten. Anstellwinkelreserven und Lasteffekte können gegeneinander verrechnet werden.

- Geringe Turbulenzintensität bedeutet insbesondere im Teillastbereich weniger Ertrag.

- Gleichzeitig sollte im Teillastbereich noch etwas mehr Anstellwinkelreserve vorhanden sein, ein Absenken der Mindestpitchwinkels und ein Absenken der Schnelllaufzahl (1) wird in Betracht gezogen werden, falls noch Optimierungspotential vorhanden ist.

- Im Bereich vor Nennleistung wirkt sich die geringe Turbulenzintensität positiv aus, falls noch Last- und Anstellwinkelreserven vorhanden sind, können diese aufgrund der geringen Böigkeit gut durch ein aggressiveres Pitchen (2) gehoben werden.

## Dichte und Turbulenzintensität steigen

- Steigen die Dichte und Turbulenzintensität an einem Standort, erhöhen sich das AEP, die Lasten und der Schallleistungspegel. Letzteres wird durch den erhöhten Inflow Noise verursacht. Zusätzlich verbessert sich der Schalltransport durch die Luft, sodass am Immissionspunkt ein erhöhter Schallleistungspegel gemessen wird. Durch die erhöhte Dichte sinken aber die Anstellwinkel.

- Die entstandene Marge im AEP kann verwendet werden um durch langsameres Drehen die Lasten zu reduzieren (3 invers). Dies hat auch eine Schallreduktion zur Folge. Der Effekt der gestiegenen Dichte (sinkende Anstellwinkel) und der steigenden Turbulenzintensität (steigende Anstellwinkel) können durch stärkeres/schwächeres Pitchen (2/2 invers), je nachdem welcher Effekt dominiert, kompensiert werden. Gleichzeitig muss evtl. Im Teillastbereich die Anstellwinkelreserve durch eine Erhöhung der Schnelllaufzahl und des $\alpha_{min}$ (invers 1) erhöht werden.

## Dichte steigt und Turbulenzintensität (Turbulenzintensität) sinkt

- Steigt die Dichte bei sinkender Turbulenzintensität kompensieren sich die Effekte für Lasten und Schall. Durch die steigende Dichte steigen die Lasten (Mittelwerte) während sich die sinkende Turbulenzintensität lastmindernd wirkt (Kollektive). Derselbe Trend schlägt sich im Schallleistungspegel nieder. Durch die geringere Turbulenzintensität sinkt der Inflow noise während die höhere Dichte die Anstellwinkel absenkt und damit zu einem geringeren Hinterkantenlärm führt. Dagegen führt die gestiegene Schallgeschwindigkeit zu einem erhöhten Schallleistungspegel am Immisionspunkt.

- Sowohl bei gesteigerter Dichte als auch reduzierter Turbulenzintensität steigen die Anstellwinkelgrenzen. Dieser Effekt kann unter Berücksichtigung der gewonnenen Lastreserven in den Kollektiven zu schärferem Pitchen (2) und hiermit verbundenen AEP-Steigungen genutzt werden.

- Auch eine Drehzahlabsenkung (3 invers) kann die gestiegenen Lasten (Mittelwerte) kompensieren.

## Dichte sinkt und Turbulenzintensität steigt

- Das Verhalten ist invers zu dem unter Punkt "Dichte steigt und Turbulenzintensität (Turbulenzintensität) sinkt" beschriebenen.

- Als mögliche Reaktion bietet sich ein früheres Pitchen (2 invers), gepaart mit einer Drehzahlsteigerung (3) an, um die gesunkenen Anstellwinkelgrenzen zu berücksichtigen.

Dichte und Turbulenzintensität sinken

- Das Verhalten ist invers zu "Dichte und Turbulenzintensität steigen".

- Entsprechend bietet sich eine Kombination aus Drehzahlsteigerung (3) und aggressiverer Pitchführung (2) und Reduktion der Anstellwinkelreserve im Teillastbereich durch (1) an.

Temperatur ist niedriger und Dichte ist höher:

- Diese Annahme entspricht einer Anlage mit großer geodätische Höhe an einem kühlen Tag.

- Aus der niedrigen Temperatur folgt, dass thermische Reserven vorhanden sind. Aus der niedrigen Dichte folgt, dass Lastreserven und auch leichte Schallreserven vorhanden sind.

- Fall Schall ist kritisch: Hier bietet sich nun an die Nennleistung soweit wie möglich anzuheben (4) und gleichzeitig die Drehzahl (3) soweit anzuheben, dass die Schallreserven ausgeschöpft sind. Sollten weitere Last- und Anstellwinkelreserven vorhanden sein, können diese durch eine Reduktion der Pitchs (2) umgesetzt werden.

- Fall Schall ist unkritisch: bei niedriger Dichte ist es sehr effektiv die Drehzahl anzuheben. In diesem Fall soll nun neben der Nennleistungserhöhung (4) die Drehzahl soweit wie irgendwie möglich angehoben werden (3 stärker) und hierfür sämtliche Lastreserven ausgenutzt werden.

**Patentansprüche**

1. Verfahren zum Betreiben einer Windenergieanlage, wobei das Verfahren die folgenden Schritte umfasst:

   - Bestimmen wenigstens zweier, vorzugsweise wenigstens dreier und besonders bevorzugt sämtlicher, der Umgebungsparameter der Umgebung der Windenergieanlage ausgewählt aus der Liste bestehend aus: Turbulenzintensität, Luftdichte, Lufttemperatur, Scherung und Niederschlag,
   - Bereitstellen von Randbedingungen zum Betreiben der Windenergieanlage, die Randbedingungen enthaltend wenigstens eine aus einer Lastrandbedingung, einer Schallpegelrandbedingung und einer Leistungsrandbedingung,
   - Anpassen einer Betriebsführung, insbesondere eines Betriebspunktes und/oder einer Betriebskennlinie, der Windenergieanlage ausgehend von einer Kombination der Änderungen der bestimmten Umgebungsparameter unter Berücksichtigung der Randbedingungen, wobei

     das Bestimmen der Umgebungsparameter ein Bestimmen der Turbulenzintensität umfasst,
     wobei eine Reduktion der Turbulenzintensität eine Erhöhung einer Anstellwinkelreserve und eine Erhöhung einer Lastreserve bewirkt und wobei beim Feststellen einer Reduktion der Turbulenzintensität das Anpassen der Betriebsführung umfasst, dass

       a) eine Schnelllaufzahl und/oder ein Mindestblattwinkel im Teillastbereich zum Erhöhen der Leistung abgesenkt wird und
       b) die Pitchkennlinie im oberen Teillastbereich hin zu höheren Leistungen verschoben wird, um die entstandenen Last- und Anstellwinkelreserven zu kompensieren, oder
       c) zusätzlich zu a) und alternativ zu b) eine Rotordrehzahl der Windenergieanlage unter Berücksichtigung der Schallpegelrandbedingung erhöht wird.

2. Verfahren nach Anspruch 1, wobei das Anpassen des Betriebspunktes die folgenden Schritte umfasst:

   - Bereitstellen des aktuellen Betriebspunktes der Windenergieanlage,
   - Bestimmen je einer Anpassung der Betriebsführung der Windenergieanlage ausgehend von einer Änderung je eines der bestimmten Umgebungsparameter und dem aktuellen Betriebspunkt,
   - Anpassen der Betriebsführung der Windenergieanlage ausgehend von einer Kombination der bestimmten Anpassungen unter Berücksichtigung der Randbedingungen.

3. Verfahren nach einem der vorstehenden Ansprüche, wobei die Umgebungsparameter wiederkehrend, insbesondere periodisch und besonders bevorzugt kontinuierlich während des Betriebs der Windenergieanlage bestimmt werden.

4. Verfahren nach einem der vorstehenden Ansprüche, wobei die Anpassung des Betriebspunktes und/oder der Betriebskennlinie wenigstens eine der folgenden Maßnahmen umfasst, wenn die Berücksichtigung der Lastrandbedingung, einer Schallpegelrandbedingung und einer Leistungsrandbedingung wenigstens eine Lastreserve, eine Schallpegelreserve oder eine Leistungsreserve angibt:

  - Anpassung, insbesondere Absenkung, eines Mindestblattwinkels und Anpassung, insbesondere Absenkung, der Schnelllaufzahl, um Abstand des Betriebspunktes zum Betriebspunkt mit optimalem Leistungsbeiwert zu reduzieren,
  - Verlagern oder Verändern einer Kennlinie zum Steuern der Pitchwinkel der Rotorblätter, genannt Pitchkennlinie, hin zu höheren Pitchwinkeln für wenigstens einen Teil des Betriebsbereiches,
  - Erhöhen einer Rotordrehzahl der Windenergieanlage,
  - Anheben einer Nennleistung der Windenergieanlage.

5. Verfahren nach einem der vorstehenden Ansprüche, wobei

  das Bestimmen der Umgebungsparameter ein Bestimmen der Luftdichte umfasst,
  wobei eine Verringerung der Luftdichte zu einer Erhöhung einer Lastreserve und einer Schallpegelreserve führt und in Folge zum Anpassen der Betriebsführung,
  eine Rotordrehzahl zum Kompensieren einer Änderung der Schnelllaufzahl unter Ausnutzung der Schallpegelreserve angepasst, insbesondere erhöht wird, und/oder
  eine Betriebskennlinie und/oder eine Pitchkennlinie unter Ausnutzung der Lastreserve angepasst wird.

6. Verfahren zum Betreiben einer Windenergieanlage, wobei das Verfahren die folgenden Schritte umfasst:

  - Bestimmen wenigstens zweier, vorzugsweise wenigstens dreier und besonders bevorzugt sämtlicher, der Umgebungsparameter der Umgebung der Windenergieanlage ausgewählt aus der Liste bestehend aus: Turbulenzintensität, Luftdichte, Lufttemperatur, Scherung und Niederschlag,
  - Bereitstellen von Randbedingungen zum Betreiben der Windenergieanlage, die Randbedingungen enthaltend wenigstens eine aus einer Lastrandbedingung, einer Schallpegelrandbedingung und einer Leistungsrandbedingung,
  - Anpassen einer Betriebsführung, insbesondere eines Betriebspunktes und/oder einer Betriebskennlinie, der Windenergieanlage ausgehend von einer Kombination der Änderungen der bestimmten Umgebungsparameter unter Berücksichtigung der Randbedingungen, wobei

  das Bestimmen der Umgebungsparameter der Scherung ein Bestimmen eines Scherkoeffizienten umfasst,
  der Scherkoeffizient indikativ für eine Änderung in vertikaler Richtung einer Windgeschwindigkeit über eine Rotorebene eines Rotors der Windenergieanlage ist,
  eine Verringerung des Scherkoeffizienten einer gleichförmigeren Anströmung mit relativ geringeren Wechsellasten entspricht,
  der Scherkoeffizient mit einem vorbestimmten Scherschwellwert verglichen wird, der vorbestimmte Scherschwellwert dem Scherkoeffizienten mit einem Minimum der Leistungsausbeute entspricht und
  das Anpassen des Betriebspunktes abhängig von einer Änderung des Scherkoeffizienten und dem Vergleich des Scherkoeffizienten mit dem vorbestimmten Scherschwellwert erfolgt.

7. Verfahren nach Anspruch 6, wobei

  ein Leistungsreduktionsbereich als ein Wertebereich des Scherkoeffizienten definiert ist, für den eine reduzierte Geschwindigkeit in der unteren Hälfte der Rotorscheibe durch eine erhöhte Geschwindigkeit in der oberen Hälfte der Rotorscheibe nicht ausgeglichen werden kann und dadurch eine Leistungsreduktion erfolgt, wobei ein Scherkoeffizient an einem unteren Ende des Leistungsreduktionsbereiches als Auslegungsscherkoeffizient definiert ist, und wobei
  das Anpassen des Betriebspunktes abhängig von einer Änderung des Scherkoeffizienten und dem Vergleich des Scherkoeffizienten mit dem Auslegungsscherkoeffizienten erfolgt.

8. Verfahren nach Anspruch 7, wobei in dem Fall, dass eine Verringerung des Scherkoeffizienten im Bereich unterhalb des Auslegungsscherkoeffizienten auftritt, das Anpassen des Betriebspunktes derart erfolgt, dass die zusätzlichen Last- und/oder Anstellwinkelreserven zur Erhöhung des Jahresenergieertrages eine Erhöhung der Drehzahl und/oder einen aggressiveren Pitchverlauf, insbesondere bei individueller Einstellung (IPC) einzelner Rotorblätter, zur Folge haben.

**9.** Verfahren nach Anspruch 7 oder 8, wobei in dem Fall, dass eine Erhöhung des Scherkoeffizienten im Bereich oberhalb des Auslegungsscherkoeffizienten aber innerhalb des Leistungsreduktionsbereichs auftritt, das Anpassen des Betriebspunktes derart erfolgt, dass zur Einhaltung der nötigen Last- und/oder Anstellwinkelreserven wenigstens eine der folgenden Anpassungen erfolgt:

   a) individuelle Einstellung der einzelnen Rotorblätter zur Reduktion der Lasten insbesondere in der oberen Hälfte der Rotorscheibe,
   b) ein früheres Pitchen im oberen Teillastbereich zur Reduktion der Lasten und
   c) Reduktion der Drehzahl zur Einhaltung der Lastgrenzen.

**10.** Verfahren nach einem der Ansprüche 7 bis 9, wobei in dem Fall, dass eine Erhöhung des Scherkoeffizienten im Bereich oberhalb des Auslegungsscherkoeffizienten und außerhalb des Leistungsreduktionsbereichs das Anpassen des Betriebspunktes derart erfolgt, dass zur Einhaltung der nötigen Last- und/oder Anstellwinkelreserven wenigstens eine der folgenden Anpassungen erfolgt:

   a) individuelle Einstellung der einzelnen Rotorblätter ohne Einbußen des Jahresenergieertrages,
   b) ein früheres Pitchen im oberen Teillastbereich und
   c) Reduktion der Drehzahl zur Reduktion der Lasten.

**11.** Verfahren nach einem der vorstehenden Ansprüche, wobei

   das Bestimmen der Umgebungsparameter ein Bestimmen der Temperatur und der Luftdichte umfasst,
   wobei eine Reduktion der Temperatur bei gleichbleibender Dichte zu thermischen Reserven in einem elektrischen Strang der Windenergieanlage führen, wobei beim Feststellen einer thermischen Reserve das Anpassen der Betriebsführung umfasst, dass
   eine Leistung angehoben wird, entweder als temporäre Leistungssteigerung oder als dauerhafte Nennleistungssteigerung, wobei das Anheben der Leistung in Abhängigkeit der Schallpegelrandbedingung

   a) ein Anheben der Drehzahl des Rotors bei vorhandener Schallpegelreserve oder
   b) ein Anheben des Drehmomentes ohne vorhandene Schallpegelreserve umfasst.

**12.** Verfahren zum Betreiben einer Windenergieanlage, wobei das Verfahren die folgenden Schritte umfasst:

   - Bestimmen wenigstens zweier, vorzugsweise wenigstens dreier und besonders bevorzugt sämtlicher, der Umgebungsparameter der Umgebung der Windenergieanlage ausgewählt aus der Liste bestehend aus: Turbulenzintensität, Luftdichte, Lufttemperatur, Scherung und Niederschlag,
   - Bereitstellen von Randbedingungen zum Betreiben der Windenergieanlage, die Randbedingungen enthaltend wenigstens eine aus einer Lastrandbedingung, einer Schallpegelrandbedingung und einer Leistungsrandbedingung,
   - Anpassen einer Betriebsführung, insbesondere eines Betriebspunktes und/oder einer Betriebskennlinie, der Windenergieanlage ausgehend von einer Kombination der Änderungen der bestimmten Umgebungsparameter unter Berücksichtigung der Randbedingungen, wobei

   das Bestimmen der Umgebungsparameter ein Bestimmen der Scherung und der Turbulenzintensität umfasst,
   wobei ein Einfluss der Scherung und der Turbulenzintensität auf die Last- und die Anstellwinkelreserve verrechnet wird und das Anpassen der Betriebsführung in Abhängigkeit der Last- und Anstellwinkelreserve wenigstens eine der folgenden Maßnahmen umfasst

   a) Anpassen der Pitchkennlinie, insbesondere im Teillastbereich bei vorhandenen Last- und Anstellwinkelreserven. Herabsetzen des Mindestblattwinkels und/oder der Schnelllaufzahl; und
   b) Kurzfristiges Erhöhen der Nennleistung, um die Böigkeit des Windes auszugleichen.

**13.** Verfahren nach einem der vorstehenden Ansprüche, wobei

   das Bestimmen der Umgebungsparameter ein Bestimmen der Luftdichte und der Turbulenzintensität umfasst,
   wobei in dem Fall, dass sowohl die Luftdichte und die Turbulenzintensität steigen ein höherer Jahresenergieertrag, höhere Lasten und ein höherer Schallleistungspegel folgt, wobei in diesem Fall das Anpassen der Betriebsführung wenigstens eine der folgenden Maßnahmen umfasst

   a) Veränderung der Pitchkennlinie unter Abwägung der sinkenden Anstellwinkel durch gestiegene Luftdichte und der steigenden Anstellwinkel durch gestiegene Turbulenzintensität;

b) Reduzieren der Drehzahl zur Reduktion der Lasten und des Schallleistungspegels; und

c) Erhöhen einer Anstellwinkelreserve im Teillastbereich durch Erhöhung der Schnelllaufzahl und/oder des Mindestblattwinkels,

und wobei in dem Fall, dass sowohl die Luftdichte und die Turbulenzintensität sinken wenigstens eine, vorzugsweise wenigstens beide und besonders bevorzugt sämtliche, der Maßnahmen a), b) und c) invertiert zur Anpassung der Betriebsführung herangezogen werden.

14. Verfahren nach einem der vorstehenden Ansprüche, wobei

das Bestimmen der Umgebungsparameter ein Bestimmen der Luftdichte und der Turbulenzintensität umfasst,
wobei in dem Fall, dass die Luftdichte steigt und die Turbulenzintensität sinkt ein Kompensieren der Auswirkungen auf Lasten und Schall erfolgt, wobei in diesem Fall das Anpassen der Betriebsführung aufgrund der gestiegenen Anstellwinkelgrenzen wenigstens eine der folgenden Maßnahmen umfasst

a) Veränderung der Pitchkennlinie zur Erhöhung des Jahresenergieertrages;
b) Absenken der Drehzahl zur Kompensation der angestiegenen Lasten, insbesondere der Lastmittelwerte.

15. Verfahren nach einem der vorstehenden Ansprüche, wobei

das Bestimmen der Umgebungsparameter ein Bestimmen der Luftdichte und der Turbulenzintensität umfasst,
wobei in dem Fall, dass die Luftdichte sinkt und die Turbulenzintensität steigt ein Kompensieren der Auswirkungen auf Lasten und Schall erfolgt, wobei in diesem Fall das Anpassen der Betriebsführung zur Kompensation der gesunkenen Anstellwinkelgrenzen wenigstens eine der folgenden Maßnahmen umfasst

a) Veränderung der Pitchkennlinie durch früheres Pitchen;
b) Erhöhen der Drehzahl.

16. Verfahren nach einem der vorstehenden Ansprüche, wobei

das Bestimmen der Umgebungsparameter ein Bestimmen der Luftdichte und der Temperatur umfasst,
wobei in dem Fall, dass die Temperatur sinkt und die Luftdichte steigt in Abhängigkeit insbesondere der Schallpegelrandbedingung das Anpassen der Betriebsführung wenigstens eine der folgenden Maßnahmen umfasst

a) Anheben der Nennleistung unter gleichzeitigem Absenken der Drehzahl zur Einhaltung der Schallpegelrandbedingung, bei unkritischer Schallpegelrandbedingung Absenken nur bis zur Einhaltung der Lastrandbedingung;
b) Gegebenenfalls Steigerung des Pitches bis zur Einhaltung der Lastrandbedingung.

**Claims**

1. Method for operating a wind power installation, wherein the method comprises the following steps:

- determining at least two, preferably at least three and particularly preferably all of the environmental parameters of the environment of the wind power installation, selected from the list consisting of: turbulence intensity, air density, air temperature, shear and precipitation,
- providing boundary conditions for operating the wind power installation, the boundary conditions containing at least one from a load boundary condition, a noise level boundary condition and a power boundary condition,
- adapting an operational control, in particular an operating point and/or an operating characteristic, of the wind power installation on the basis of a combination of the changes in the determined environmental parameters taking into consideration the boundary conditions, wherein

the determining of the environmental parameters comprises determining the turbulence intensity,
wherein a reduction in the turbulence intensity brings about an increase in an angle of attack reserve and an increase in a load reserve, and wherein, upon establishing a reduction in the turbulence intensity, the adaptation of the operational control comprises that

a) a tip-speed-ratio and/or a minimum blade angle is reduced in the partial load range in order to increase the power, and
b) the pitch characteristic is displaced in the upper partial load range towards higher powers in order to compensate for the load and angle of attack reserves which have arisen, or

c) in addition to a) and alternatively to b), a rotor rotational speed of the wind power plant is increased taking into consideration the noise level boundary condition.

2. Method according to Claim 1, wherein the adaptation of the operating point comprises the following steps:

- providing the current operating point of the wind power installation,
- determining each adaptation of the operational control of the wind power installation on the basis of a change in one of the determined environmental parameters and on the current operating point,
- adapting the operational control of the wind power installation on the basis of a combination of the determined adaptations taking into consideration the boundary conditions.

3. Method according to either of the preceding claims, wherein the environmental parameters are determined on a recurring basis, in particular periodically and particularly preferably continuously during the operation of the wind power installation.

4. Method according to one of the preceding claims, wherein the adaptation of the operating point and/or of the operating characteristic comprises at least one of the following measures if the taking into consideration of the load boundary condition, a noise level boundary condition and a power boundary condition specifies at least one load reserve, a noise level reserve or a power reserve:

- adapting, in particular reducing, a minimum blade angle, and adapting, in particular reducing, the tip-speed-ratio, in order to reduce the distance of the operating point from the operating point with an optimum power coefficient,
- shifting or changing a characteristic for controlling the pitch angles of the rotor blades, referred to as pitch characteristic, to higher pitch angles for at least part of the operating range,
- increasing a rotor rotational speed of the wind power installation,
- raising a nominal power of the wind power installation.

5. Method according to one of the preceding claims, wherein

the determining of the environmental parameters comprises determining the air density, wherein a reduction in the air density leads to an increase of a load reserve and of a noise level reserve and, as a consequence, to adapting the operational control,

a rotor rotational speed is adapted, in particular increased, to compensate for a change in the tip-speed-ratio using the noise level reserve, and/or an operating characteristic and/or a pitch characteristic is adapted using the load reserve.

6. Method for operating a wind power installation, wherein the method comprises the following steps:

- determining at least two, preferably at least three and particularly preferably all of the environmental parameters of the environment of the wind power installation, selected from the list consisting of: turbulence intensity, air density, air temperature, shear and precipitation,
- providing boundary conditions for operating the wind power installation, the boundary conditions containing at least one from a load boundary condition, a noise level boundary condition and a power boundary condition,
- adapting an operational control, in particular an operating point and/or an operating characteristic, of the wind power installation on the basis of a combination of the changes in the determined environmental parameters taking into consideration the boundary conditions, wherein

the determining of the environmental parameters of shear comprises determining a shear coefficient,
the shear coefficient is indicative of a change in the vertical direction of a wind speed over a rotor plane of a rotor of the wind power installation,
a reduction in the shear coefficient corresponds to a more uniform incident flow with relatively lower alternating loads,
the shear coefficient is compared with a predetermined shear threshold value,
the predetermined shear threshold value corresponds to the shear coefficient with a minimum of the power output, and
the operating point is adapted in accordance with a change in the shear coefficient and the comparison of the shear coefficient with the predetermined shear threshold value.

7. Method according to Claim 6, wherein

a power reduction range is defined as a value range of the shear coefficient, for which a reduced speed in the lower half of the rotor disc cannot be compensated for by an increased speed in the upper half of the rotor disc and thus a power reduction takes place, wherein a shear coefficient at a lower end of the power reduction range is defined as the design shear coefficient, and wherein the operating point is adapted in accordance with a change in the shear coefficient and the comparison of the shear coefficient with the design shear coefficient.

8. Method according to Claim 7, wherein
in the event that a reduction in the shear coefficient occurs in the range below the design shear coefficient, the operating point is adapted in such a manner that the additional load and/or angle of attack reserves for increasing the annual energy production result in an increase in the rotational speed and/or in a more aggressive pitch profile, in particular upon individual adjustment (IPC) of individual rotor blades.

9. Method according to Claim 7 or 8, wherein
in the event that an increase in the shear coefficient occurs in the range above the design shear coefficient but within the power reduction range, the operating point is adapted in such a manner that, in order to maintain the necessary load and/or angle of attack reserves, at least one of the following adaptations takes place:

   a) individually adjusting the individual rotor blades in order to reduce the loads in particular in the upper half of the rotor disc,
   b) adjusting the pitch at an earlier point in the upper partial load range in order to reduce the loads, and
   c) reducing the rotational speed in order to maintain the load limits.

10. Method according to one of Claims 7 to 9, wherein
in the event that an increase in the shear coefficient occurs in the range above the design shear coefficient and outside the power reduction range, the operating point is adapted in such a manner that, in order to maintain the necessary load and/or angle of attack reserves, at least one of the following adaptations takes place:

   a) individually adjusting the individual rotor blades without losses of the annual energy production,
   b) adjusting the pitch at an earlier point in the upper partial load range, and
   c) reducing the rotational speed in order to reduce the loads.

11. Method according to one of the preceding claims, wherein

   the determining of the environmental parameters comprises determining the temperature and the air density,
   wherein a reduction in the temperature with the density remaining the same leads to thermal reserves in an electrical section of the wind power installation, wherein, upon establishing a thermal reserve, the adaptation of the operational control comprises that
   a power is increased, either as a temporary power increase or as a permanent nominal power increase, wherein the increasing of the power in accordance with the noise level boundary condition comprises

   a) increasing the rotational speed of the rotor with an existing noise level reserve, or
   b) increasing the torque without an existing noise level reserve.

12. Method for operating a wind power installation, wherein the method comprises the following steps:

   - determining at least two, preferably at least three and particularly preferably all of the environmental parameters of the environment of the wind power installation, selected from the list consisting of: turbulence intensity, air density, air temperature, shear and precipitation,
   - providing boundary conditions for operating the wind power installation, the boundary conditions containing at least one from a load boundary condition, a noise level boundary condition and a power boundary condition,
   - adapting an operational control, in particular an operating point and/or an operating characteristic, of the wind power installation on the basis of a combination of the changes in the determined environmental parameters taking into consideration the boundary conditions, wherein

   the determining of the environmental parameters comprises determining the shear and the turbulence intensity,
   wherein an influence of the shear and of the turbulence intensity on the load and the angle of attack reserve is calculated, and the adaptation of the operational control in accordance with the load and angle of attack reserve comprises at least one of the following measures

   a) adapting the pitch characteristic, in particular in the partial load range with existing load and angle of attack reserves, reducing the minimum blade angle and/or the tip-speed-ratio; and
b) briefly increasing the nominal power in order to compensate for the gustiness of the wind.

13. Method according to one of the preceding claims, wherein

the determining of the environmental parameters comprises determining the air density and the turbulence intensity,
wherein, in the event that both the air density and the turbulence intensity increase, a higher annual energy production, higher loads and a higher noise output level follow, wherein, in this case, the adaptation of the operational control comprises at least one of the following measures

a) changing the pitch characteristic by taking into account the decreasing angles of attack due to increased air density and the increasing angles of attack due to increased turbulence intensity;
b) reducing the rotational speed in order to reduce the loads and the noise output level; and
c) increasing an angle of attack reserve in the partial load range by increasing the tip-speed-ratio and/or the minimum blade angle,

wherein, in the event that both the air density and the turbulence intensity decrease, at least one, preferably at least two and particularly preferably all the measures a), b) and c) are used in inverted form in order to adapt the operational control.

14. Method according to one of the preceding claims, wherein

the determining of the environmental parameters comprises determining the air density and the turbulence intensity,
wherein, in the event that the air density increases and the turbulence intensity decreases, the effects on loads and noise are compensated for, wherein, in this case, the adaptation of the operational control because of the increased angle of attack limits comprises at least one of the following measures

a) changing the pitch characteristic in order to increase the annual energy production;
b) reducing the rotational speed in order to compensate for the increased loads, in particular the load average values.

15. Method according to one of the preceding claims, wherein

the determining of the environmental parameters comprises determining the air density and the turbulence intensity,
wherein, in the event that the air density decreases and the turbulence intensity increases, the effects on loads and noise are compensated for, wherein, in this case, the adaptation of the operational control in order to compensate for decreased angle of attack limits comprises at least one of the following measures

a) changing the pitch characteristic by adjusting the pitch at an earlier point;
b) increasing the rotational speed.

16. Method according to one of the preceding claims, wherein

the determining of the environmental parameters comprises determining the air density and the temperature,
wherein, in the event that the temperature decreases and the air density increases, in accordance in particular with the noise level boundary condition, the adaptation of the operational control comprises at least one of the following measures

a) raising the nominal power while simultaneously reducing the rotational speed in order to maintain the noise level boundary condition, and, in the event of a noncritical noise level boundary condition, reducing same only as far as maintaining the load boundary condition;
b) optionally increasing the pitch until the load boundary condition is maintained.

**Revendications**

1. Procédé destiné à faire fonctionner une éolienne, dans lequel le procédé comprend les étapes suivantes :

- la détermination d'au moins deux, de préférence d'au moins trois et, de manière particulièrement préférée, de tous les paramètres environnementaux de l'environnement de l'éolienne choisis dans la liste comprenant : l'intensité de turbulence, la densité de l'air, la température de l'air, le cisaillement et les précipitations,
- la mise à disposition de conditions limites pour le fonctionnement de l'éolienne, les conditions limites contenant au moins une d'une condition limite de charge, d'une condition limite de niveau sonore et d'une condition limite de puissance,
- l'adaptation d'une gestion d'exploitation, en particulier d'un point de fonctionnement et/ou d'une courbe caractéristique de fonctionnement de l'éolienne, à partir d'une combinaison des modifications des paramètres environnementaux déterminés, en tenant compte des conditions limites, dans lequel

la détermination des paramètres environnementaux comprend une détermination de l'intensité de turbulence,
dans lequel une réduction de l'intensité de turbulence entraîne une augmentation d'une réserve d'angle d'attaque et une augmentation d'une réserve de charge et dans lequel, lors de la constatation d'une réduction de l'intensité de turbulence, comprend l'adaptation de la gestion d'exploitation selon laquelle

a) une vitesse spécifique et/ou un angle de pale minimum sont réduits dans la plage de charge partielle pour augmenter la puissance et
b) la courbe caractéristique de pas est décalée dans la plage de charge partielle supérieure vers des puissances plus élevées pour compenser les réserves de charge et d'angle d'attaque qui en résultent, ou
c) en plus de a) et en variante à b), une vitesse de rotation de rotor de l'éolienne est augmentée en tenant compte de la condition limite de niveau sonore.

2. Procédé selon la revendication 1, dans lequel l'adaptation du point de fonctionnement comprend les étapes suivantes :

- la fourniture du point de fonctionnement actuel de l'éolienne,
- la détermination respectivement d'une adaptation de la gestion d'exploitation de l'éolienne en partant d'une modification de respectivement un des paramètres environnementaux déterminés et du point de fonctionnement actuel,
- l'adaptation de la gestion d'exploitation de l'éolienne à partir d'une combinaison des adaptations déterminées en tenant compte des conditions limites.

3. Procédé selon l'une quelconque des revendications précédentes, dans lequel les paramètres environnementaux sont déterminés de manière récurrente, en particulier périodiquement et de manière particulièrement préférée en continu pendant le fonctionnement de l'éolienne.

4. Procédé selon l'une quelconque des revendications précédentes, dans lequel
l'adaptation du point de fonctionnement et/ou de la courbe caractéristique de fonctionnement comprend au moins une des mesures suivantes lorsque la prise en compte de la condition limite de charge, d'une condition limite de niveau sonore et d'une condition marginale de puissance indique au moins une réserve de charge, une réserve de niveau sonore ou une réserve de puissance :

- l'adaptation, en particulier l'abaissement, d'un angle de pale minimum et l'adaptation, en particulier l'abaissement, de la vitesse spécifique pour réduire la distance entre le point de fonctionnement et le point de fonctionnement avec un coefficient de performance optimal,
- le déplacement ou la modification d'une courbe caractéristique de commande des angles de pas des pales de rotor, appelée courbe caractéristique de pas, vers des angles de pas plus élevés pour au moins une partie de la plage de fonctionnement,
- l'augmentation de la vitesse de rotation de rotor de l'éolienne,
- l'augmentation d'une puissance nominale de l'éolienne.

5. Procédé selon l'une quelconque des revendications précédentes, dans lequel

la détermination des paramètres environnementaux comprend une détermination de la densité de l'air,
dans lequel une diminution de la densité de l'air entraîne une augmentation d'une réserve de charge et d'une réserve de niveau sonore et par conséquent pour adapter la gestion d'exploitation,
une vitesse de rotation de rotor est adaptée, en particulier est augmentée, pour compenser une modification de la vitesse spécifique en utilisant la réserve de niveau sonore, et/ou
une courbe caractéristique de fonctionnement et/ou une courbe caractéristique de pas sont adaptées en utilisant la réserve de charge.

6. Procédé de fonctionnement d'une éolienne, dans lequel le procédé comprend les étapes suivantes :

- la détermination d'au moins deux, de préférence d'au moins trois et, de manière particulièrement préférée, de tous les paramètres environnementaux de l'environnement de l'éolienne choisis dans la liste comprenant : l'intensité de turbulence, la densité de l'air, la température de l'air, le cisaillement et les précipitations,
- la mise à disposition de conditions limites pour le fonctionnement de l'éolienne, les conditions limites contenant au moins une d'une condition limite de charge, d'une condition limite de niveau sonore et d'une condition limite de puissance,
- l'adaptation d'une gestion d'exploitation, en particulier d'un point de fonctionnement et/ou d'une courbe caractéristique de fonctionnement de l'éolienne, à partir d'une combinaison des modifications des paramètres environnementaux déterminés, en tenant compte des conditions limites, dans lequel

la détermination des paramètres environnementaux du cisaillement comprend une détermination d'un coefficient de cisaillement,
le coefficient de cisaillement indique une modification dans la direction verticale d'une vitesse du vent sur un plan de rotor d'un rotor de l'éolienne,
une diminution du coefficient de cisaillement correspond à un afflux plus uniforme avec des charges alternées relativement plus faibles,
le coefficient de cisaillement est comparé à une valeur de seuil de cisaillement prédéterminée,
la valeur de seuil de cisaillement prédéterminée correspond au coefficient de cisaillement avec un minimum de rendement de puissance et
l'adaptation du point de fonctionnement s'effectue en fonction d'une modification du coefficient de cisaillement et de la comparaison du coefficient de cisaillement à la valeur de seuil de cisaillement prédéterminée.

7. Procédé selon la revendication 6, dans lequel

une plage de réduction de puissance est définie comme une plage de valeurs du coefficient de cisaillement pour laquelle une vitesse réduite dans la moitié inférieure du disque du rotor ne peut pas être compensée par une vitesse accrue dans la moitié supérieure du disque du rotor et une réduction de puissance s'effectue ainsi, dans lequel un coefficient de cisaillement sur une extrémité inférieure de la plage de réduction de puissance est défini comme un coefficient de cisaillement de conception, et dans lequel
l'adaptation du point de fonctionnement est effectuée en fonction d'une modification du coefficient de cisaillement et de la comparaison du coefficient de cisaillement au coefficient de cisaillement de conception.

8. Procédé selon la revendication 7, dans lequel
si une diminution du coefficient de cisaillement se produit dans la plage inférieure au coefficient de cisaillement de conception, l'adaptation du point de fonctionnement est effectuée de telle manière que les réserves de charge et/ou d'angle d'attaque supplémentaires pour augmenter le rendement énergétique annuel entraînent une augmentation de la vitesse de rotation et/ou une variation de pas plus agressive, en particulier en cas de réglage individuel (IPC) de pales de rotor individuelles.

9. Procédé selon la revendication 7 ou 8, dans lequel
si une augmentation du coefficient de cisaillement se produit dans la plage au-dessus du coefficient de cisaillement de conception mais dans la plage de réduction de puissance, l'adaptation du point de fonctionnement est effectuée de telle manière qu'au moins une des adaptations suivantes est effectuée pour respecter les réserves de charge et/ou d'angle d'attaque nécessaires :

a) réglage individuel des différentes pales de rotor pour réduire les charges, en particulier dans la moitié supérieure du disque du rotor,
b) un pas précoce dans la plage de charge partielle supérieure pour réduire les charges et
c) réduction de la vitesse de rotation pour respecter les limites de charge.

10. Procédé selon l'une quelconque des revendications 7 à 9, dans lequel
dans le cas d'une augmentation du coefficient de cisaillement dans la plage au-dessus du coefficient de cisaillement de conception et en dehors de la plage de réduction de puissance, l'adaptation du point de fonctionnement est effectuée de telle manière qu'au moins une des adaptations suivantes est effectuée pour respecter les réserves de charge et/ou d'angle d'attaque nécessaires :

a) réglage individuel des diverses pales de rotor sans perte de rendement énergétique annuel,
b) un pas plus précoce dans la plage de charge partielle supérieure et
c) réduction de la vitesse de rotation pour réduire les charges.

11. Procédé selon l'une quelconque des revendications précédentes, dans lequel

la détermination des paramètres environnementaux comprend une détermination de la température et de la densité de l"air,
dans lequel une réduction de la température à densité constante entraîne des réserves thermiques dans un circuit électrique de l'éolienne, dans lequel, lorsque l'on constate une réserve thermique, l'adaptation de la gestion d'exploitation comprend que

une puissance est augmentée, soit en tant qu'augmentation temporaire de la puissance, soit en tant qu'augmentation permanente de la puissance nominale, dans lequel l'augmentation de la puissance en fonction de la condition limite du niveau sonore comprend

a) une augmentation de la vitesse de rotation du rotor en présence d'une réserve de niveau sonore ou
b) une augmentation du couple de rotation sans la présence d'une réserve de niveau sonore.

12. Procédé destiné à faire fonctionner une éolienne, dans lequel le procédé comprend les étapes suivantes :

- la détermination d'au moins deux, de préférence d'au moins trois et, de manière particulièrement préférée, de tous les paramètres environnementaux de l'environnement de l'éolienne choisis dans la liste comprenant : l'intensité de turbulence, la densité de l'air, la température de l'air, le cisaillement et les précipitations,
- la mise à disposition de conditions limites pour le fonctionnement de l'éolienne, les conditions limites contenant au moins une d'une condition limite de charge, d'une condition limite de niveau sonore et d'une condition limite de puissance,
- l'adaptation d'une gestion d'exploitation, en particulier d'un point de fonctionnement et/ou d'une courbe caractéristique de fonctionnement de l'éolienne, à partir d'une combinaison des modifications des paramètres environnementaux déterminés, en tenant compte des conditions limites, dans lequel

la détermination des paramètres environnementaux comprend une détermination du cisaillement et de l'intensité de turbulence,
dans lequel une influence du cisaillement et de l'intensité de turbulence sur la réserve de charge et d'angle d'attaque est calculée, et l'adaptation de la gestion d'exploitation en fonction de la réserve de charge et d'angle d'attaque comprend au moins une des mesures suivantes

a) l'adaptation de la courbe caractéristique de pas, en particulier dans la plage de charge partielle en présence de réserves de charge et d'angle d'attaque, la diminution de l'angle de pale minimum et/ou de la vitesse spécifique ; et
b) l'augmentation temporaire de la puissance nominale pour compenser les rafales de vent.

13. Procédé selon l'une quelconque des revendications précédentes, dans lequel

la détermination des paramètres environnementaux comprend une détermination de la densité de l'air et de l'intensité de turbulence, dans lequel, si tant la densité de l'air que l'intensité de turbulence augmentent, cela entraîne un rendement énergétique annuel plus élevé, des charges plus importantes et un niveau de puissance sonore supérieur, dans lequel, dans ce cas, l'adaptation de la gestion d'exploitation comprend au moins une des mesures suivantes

a) la modification de la courbe caractéristique de pas en appréciant la diminution des angles d'attaque en raison de l'augmentation de la densité de l'air et de l'augmentation des angles d'attaque en raison de l'augmentation de l'intensité de turbulence ;
b) la réduction de la vitesse de rotation pour réduire les charges et le niveau de puissance sonore ; et
c) l'augmentation d'une réserve d'angle d'attaque dans la plage de charge partielle en augmentant la vitesse spécifique et/ou l'angle de pale minimal,

et dans lequel, si tant la densité de l'air que l'intensité de turbulence diminuent, au moins une, de préférence au moins les deux, et de manière particulièrement préférée toutes les mesures a), b) et c) sont utilisées de manière inversée pour adapter la gestion d'exploitation.

14. Procédé selon l'une quelconque des revendications précédentes, dans lequel

la détermination des paramètres environnementaux comprend une détermination de la densité de l'air et de l'intensité de turbulence, dans lequel, si la densité de l'air augmente et l'intensité de turbulence diminue, une compensation des effets sur les charges et le bruit est effectuée, dans lequel, dans ce cas, l'adaptation de la gestion d'exploitation en raison des limites d'angle d'attaque augmentées comprend au moins une des mesures suivantes

a) la modification de la courbe caractéristique de pas pour augmenter le rendement énergétique annuel ;

b) l'abaissement de la vitesse de rotation pour compenser les charges croissantes, en particulier les valeurs moyennes de charge.

15. Procédé selon l'une quelconque des revendications précédentes, dans lequel

la détermination des paramètres environnementaux comprend une détermination de la densité de l'air et de l'intensité de turbulence, dans lequel, si la densité de l'air diminue et l'intensité de turbulence augmente, une compensation des effets sur les charges et le bruit est effectuée, dans lequel, dans ce cas, l'adaptation de la gestion d'exploitation pour compenser les limites d'angle d'attaque réduites comprend au moins une des mesures suivantes

a) la modification de la courbe caractéristique de pas en raison d'un pas plus précoce ;

b) l'augmentation de la vitesse de rotation.

16. Procédé selon l'une quelconque des revendications précédentes, dans lequel

la détermination des paramètres environnementaux comprend une détermination de la densité de l'air et de la température, dans lequel, si la température diminue et la densité de l'air augmente, en fonction en particulier de la condition limite de niveau sonore, l'adaptation de la gestion d'exploitation comprend au moins une des mesures suivantes

a) l'augmentation de la puissance nominale avec abaissement simultané de la vitesse de rotation pour respecter la condition limite de niveau sonore, en cas de condition limite de niveau sonore non critique, abaissement uniquement jusqu'au respect de la condition limite de charge ;

b) le cas échéant, l'augmentation du pas jusqu'au respect de la condition limite de charge.

Fig. 1

Fig. 2

Fig. 3

Fig. 4

Fig. 5

Fig. 6

**EP 3 995 691 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020102934 A1
- EP 3317519 A1
- US 2018171978 A1
- EP 1918581 A2
- US 2013280066 A1